# EUROPEAN PATENT APPLICATION

(11) **EP 4 796 407 A1**
(43) Date of publication of application: **26.08.2026**
(21) Application number: 24893070.3
(22) Date of filing: 11.10.2024
(51) Int. Cl.: B60W 50/00, G06N 3/08

(54) **INFORMATION PROCESSING METHOD AND RELATED DEVICE**

(30) Priority: 24.11.2023 CN 202311594214
(71) Applicant: HUAWEI TECHNOLOGIES CO., LTD., Shenzhen 518129 (CN)
(72) Inventor: CHE, Yuhan, Shenzhen, Guangdong 518129 (CN); CHENG, Siyuan, Shenzhen, Guangdong 518129 (CN); CHEN, Yuying, Shenzhen, Guangdong 518129 (CN); ZHANG, Hongbo, Shenzhen, Guangdong 518129 (CN)
(74) Representative: MERH-IP Matias Erny Reichl Hoffmann Patentanwälte PartG mbB
(86) International application number: PCT/CN2024/124108
(87) International publication number: WO 2025/107911

(57) **Abstract**

Embodiments of this application disclose an information processing method and a related device. The method may be applied to the autonomous driving field in artificial intelligence. The method includes: inputting, to a deep learning model, first information corresponding to a traffic scene around an ego vehicle, and obtaining second information corresponding to the first information, where the first information includes first text information, the second information is obtained based on the deep learning model, and the second information corresponds to any one of the following tasks: making a decision on behavior of the ego vehicle, planning a trajectory for the ego vehicle, or controlling the ego vehicle. Input information of the deep learning model provided in this application includes text information that facilitates understanding by a user. Therefore, interpretability of a running process of the deep learning model is improved, to be specific, a decision-making, trajectory planning, or control process of an autonomous vehicle is more transparent, so that the user can more intuitively understand behavior of the autonomous vehicle.

## Description

This application claims priority to Chinese Patent Application No. 202311594214.1, filed with the China National Intellectual Property Administration on November 24, 2023 and entitled "INFORMATION PROCESSING METHOD AND RELATED DEVICE", which is incorporated herein by reference in its entirety.

### TECHNICAL FIELD

This application relates to the artificial intelligence field, and in particular, to an information processing method and a related device.

### BACKGROUND

Artificial intelligence (Artificial Intelligence, AI) is a theory, a method, a technology, and an application system for using a digital computer or a machine controlled by a digital computer to simulate, extend, and expand human intelligence, sense an environment, obtain knowledge, and use the knowledge to obtain an optimal result. In other words, the artificial intelligence is a branch of computer science and is intended to understand essence of intelligence and produce a new intelligent machine that can react in a manner similar to human intelligence. The artificial intelligence is to study design principles and implementation methods of various intelligent machines, to enable the machines to have perception, inference, and decision-making functions. Research in the artificial intelligence field includes robotics, natural language processing, computer vision, decision-making and inference, human-computer interaction, recommendations and searches, basic theories of AI, and the like.

The autonomous driving field is an application field of a scenario of the artificial intelligence field. For example, information about an environment around an ego vehicle may be obtained, predicted information is generated by one or more neural networks, and then a decision is made on behavior of the ego vehicle and a trajectory is planned for the ego vehicle based on the predicted information. For example, when a vehicle in front is illegally parked and occupies a lane, whether the ego vehicle is to change a lane is determined, and when and how the ego vehicle is to change a lane is planned.

However, because the information about the environment around the ego vehicle is obtained and the predicted information obtained by the neural network is directly used to determine the behavior of the ego vehicle, interpretability of an entire running process of the neural network is poor.

### SUMMARY

This application provides an information processing method and a related device, to improve interpretability of a running process of a deep learning model, to be specific, make a decision-making, trajectory planning, or control process of an autonomous vehicle more transparent, so that a user can more intuitively understand behavior of the autonomous vehicle.

This application provides the following technical solutions.

According to a first aspect, this application provides an information processing method that may be applied to the autonomous driving field in the artificial intelligence field. In the method, a first device may input, to a deep learning model that has undergone a training operation, first information corresponding to a traffic scene around an ego vehicle, to obtain second information corresponding to the first information. The first information includes first text information. The second information is obtained based on the deep learning model that has undergone the training operation. The second information corresponds to any one of the following tasks: making a decision on behavior of the ego vehicle, planning a trajectory for the ego vehicle, or controlling the ego vehicle.

The first device may be specifically represented as a vehicle or a cloud server. For example, in a case, the first device is a vehicle. If the deep learning model is deployed on the vehicle, that the first device inputs, to the deep learning model that has undergone the training operation, the first information corresponding to the traffic scene around the ego vehicle may include: The first device inputs, to the locally deployed deep learning model, the first information corresponding to the traffic scene around the ego vehicle. That the first device obtains the second information corresponding to the first information may include: The first device determines, based on first predicted information generated by the deep learning model, the second information corresponding to the first information.

In another case, the first device is a vehicle. If the deep learning model that has undergone the training operation is deployed on a cloud server, that the first device inputs, to the deep learning model that has undergone the training operation, the first information corresponding to the traffic scene around the ego vehicle may include: The first device sends, to the cloud server on which the deep learning model is deployed, the first information corresponding to the traffic scene around the ego vehicle. That the first device obtains the second information corresponding to the first information may include: The first device receives first predicted information sent by the cloud server, and determines, based on the first predicted information, the second information corresponding to the first information.

In another case, the first device is a cloud server on which the deep learning model is deployed. In this case, that the first device inputs, to the deep learning model that has undergone the training operation, the first information corresponding to the traffic scene around the ego vehicle may include: After receiving first information sent by a vehicle, the first device inputs, to the locally deployed deep learning model, the first information corresponding to the traffic scene around the ego vehicle. That the first device obtains the second information corresponding to the first information may include: The first device sends first predicted information to the vehicle, where the first predicted information is used for the vehicle to determine the second information.

The first information includes the first text information, and the first text information may correspond to a task (subsequently referred to as a "first task" for ease of description) performed by the deep learning model.

For example, the "making a decision on behavior of the ego vehicle" may be understood as that the second information indicates behavior to be subsequently performed by the ego vehicle; the "planning a trajectory for the ego vehicle" may be understood as that the second information may include information about a subsequent trajectory of the ego vehicle; and the "controlling the ego vehicle" may be understood as that the second information may include a vehicle control instruction for the ego vehicle.

In this implementation, the deep learning model capable of processing text information is introduced into the autonomous driving field, and based on the second information generated by the deep learning model for processing text information, a decision is made on behavior of the ego vehicle, and a trajectory is planned for the ego vehicle, or the ego vehicle is controlled. Input information of the deep learning model provided in this application includes text information that facilitates understanding by a user. Therefore, interpretability of a running process of the deep learning model is improved, to be specific, a decision-making, trajectory planning, or control process of an autonomous vehicle is more transparent, so that the user can more intuitively understand behavior of the autonomous vehicle.

In a possible implementation, the first text information includes information about preset text corresponding to the first task performed by the deep learning model. For example, preset text corresponding to each of at least one second task may be deployed on a vehicle, and the vehicle obtains, from preset text corresponding to the at least one second task, the preset text corresponding to the first task, to obtain the first text information. Alternatively, the first text information includes information about text entered by a user.

For example, the first text information may include initial feature information of the preset text (or the text entered by the user) that is obtained by performing feature extraction on the preset text (or the text entered by the user). The "feature extraction" may also be understood as "initial encoding", or the "feature extraction" may also be understood as vectorization (embedding). For example, the first text information may be specifically represented in a token (token) form.

In this implementation, two cases of information that may be included in the first text information are described, to improve implementation flexibility of the solution. When the first text information includes the information about the preset text corresponding to the first task performed by the deep learning model, after the first task is determined, the first text information can be quickly determined, to improve efficiency of obtaining the second information. When the first text information includes the information about the text entered by the user, question answering may be performed based on a question of the user. This helps improve user loyalty of the solution, and also better helps the user understand behavior of the vehicle during autonomous driving.

In a possible implementation, in the method, the first device may further input, to the deep learning model, a first question corresponding to the traffic scene, where the first question is used to obtain a first answer corresponding to the first question, the first answer is obtained by the deep learning model, the first information is a second question, the second information is a second answer corresponding to the second question, and the first text information includes information in the first answer.

In this implementation, the first answer to the first question is first obtained, then the second question is generated based on the first answer, and then the answer to the second question is obtained, where the first question and the second question correspond to a same traffic scene. That is, questions are progressively put to the deep learning model. This helps reduce difficulty in answering the second question by the deep learning model, and also helps improve a capability of the deep learning model to process a question corresponding to a complex traffic scene. In addition, the manner of progressively asking questions further helps introduce logical thinking of stepwise inference into the deep learning model used in the autonomous driving field, to improve human-like nature of the finally obtained second answer.

In a possible implementation, the first information further includes first feature information, the first feature information includes feature information of information about an environment around the ego vehicle, and the information about the environment includes physical attribute information of an object around the ego vehicle. For example, the object around the ego vehicle may include a dynamic obstacle around the ego vehicle, a static obstacle around the ego vehicle, a traffic index line around the ego vehicle, a traffic sign around the ego vehicle, or another type of object.

Optionally, the first feature information further includes feature information of driving behavior information of the ego vehicle and/or feature information of navigation information of the ego vehicle.

In this implementation, the first information includes both the first text information and the first feature information, and the first feature information includes the feature information of the information about the environment around the ego vehicle. Therefore, the deep learning model can determine the second information fully based on the feature information of the information about the environment around the ego vehicle. This helps improve appropriateness of the second information output by the deep learning model.

In a possible implementation, the first feature information is obtained based on a feature extraction network (subsequently referred to as a "first feature extraction network" for ease of description). The first feature extraction network belongs to a first neural network. The first neural network is configured to perform at least two of the following tasks: predicting a trajectory of an object around the ego vehicle, making a decision on behavior of the ego vehicle, planning a trajectory for the ego vehicle, predicting a speed range of the ego vehicle, or controlling the ego vehicle.

In this implementation, because the first neural network is configured to perform at least two of a plurality of tasks of predicting a trajectory of an object around the ego vehicle, making a decision on behavior of the ego vehicle, planning a trajectory for the ego vehicle, predicting a speed range of the ego vehicle, or controlling the ego vehicle, the first feature information needs to cover more abundant information. In other words, the first information including the first feature information covers more information. This helps the deep learning model obtain more information, and further helps improve accuracy of information output by the deep learning model.

In a possible implementation, the vehicle may input, to the first feature extraction network, the information about the environment around the ego vehicle. Optionally, the vehicle may further input the driving behavior information and/or the navigation information of the ego vehicle to the first feature extraction network, to obtain third feature information generated by the first feature extraction network, and then obtain the first feature information.

For example, in a case, the "third feature information" and the "first feature information" have a same meaning. To be specific, the vehicle may directly use the third feature information generated by the first feature extraction network as the first feature information.

In another case, after obtaining the third feature information, the vehicle may further input the third feature information to a second feature extraction network, and perform a feature update on the third feature information through the second feature extraction network, to obtain the first feature information. For example, the third feature information may be specifically represented in a feature map (feature map) form, and the first feature information may be specifically represented in a token (token) form. To be specific, the second feature extraction network may convert the third feature information in the feature map form into the first feature information in the token form. Because the deep learning model is a machine learning model for processing text information, if the first feature information in the token form is obtained and then input to the deep learning model, it is easier for the deep learning model to understand the first feature information. This reduces difficulty in understanding the first feature information by the deep learning model, and helps improve accuracy of information output by the deep learning model.

In a possible implementation, the first information is a second question, the second information is a second answer corresponding to the second question, the second answer is included in a preset answer set corresponding to the second question, and the second answer is obtained, based on the preset answer set, from at least one candidate answer generated by the deep learning model. For example, the preset answer set may be deployed on an execution device, and the preset answer set includes one or more answers. After obtaining the first predicted information, the execution device may determine an intersection set between the at least one candidate answer indicated by the first predicted information and the preset answer set, where the intersection set includes at least one first candidate answer. The execution device may determine the second answer from the at least one first candidate answer based on a first probability value corresponding to each of the at least one first candidate answer, where a first probability value corresponding to the second answer is the largest one of a first probability value corresponding to the at least one first candidate answer.

In this implementation, the deep learning model sometimes gives an irrelevant answer or talks nonsense, to be specific, the at least one candidate answer determined by the deep learning model may include an answer irrelevant to a question. Therefore, to avoid occurrence of the foregoing problem, a second preset answer set corresponding to the second question may be deployed. At least one answer included in the second preset answer set corresponding to the second question is an answer related to the second question. The second answer corresponding to the second question is finally determined based on the second preset answer set and the at least one candidate answer determined based on the deep learning model. This helps avoid a problem that the finally obtained second answer is irrelevant to the second question, to improve accuracy of the second answer obtained by the deep learning model.

In a possible implementation, the first information is a second question, the second information is a second answer corresponding to the second question, the second answer is obtained by a classification network, second feature information includes feature information of a start flag [CLS] bit in feature information of the second answer, and the classification network is configured to determine, from at least one preset answer, the second answer corresponding to the second feature information. For example, a trained classification network may be deployed on an execution device. After obtaining the first predicted information that is generated by the deep learning model and that corresponds to the second question, the execution device may determine feature information of a second candidate answer from the first predicted information, where a first probability value of the second candidate answer is the largest one of a first probability value of at least one candidate answer indicated by the first predicted information. The execution device may obtain the second feature information from the feature information of the second candidate answer, and input the second feature information to the classification network, to obtain the second answer generated by the classification network.

In this implementation, because the feature information of the start flag [CLS] bit (that is, the second feature information) can represent an overall meaning of a candidate answer, using the feature information of the start flag [CLS] bit to represent feature information of the candidate answer is appropriate. The classification network is configured to determine, from the at least one preset answer, a second answer to which the second feature information belongs. In this case, the second answer is limited to the at least one preset answer. This helps avoid a problem that the finally obtained second answer is irrelevant to the second question, to improve accuracy of the second answer obtained by the deep learning model.

In a possible implementation, the first information is a second question, and the second information is a second answer corresponding to the second question. That the first device inputs, to the deep learning model, the first information corresponding to the traffic scene around the ego vehicle may include: The first device inputs a plurality of second questions to the deep learning model. For example, the plurality of second questions correspond to a same task, in other words, semantics of the plurality of second questions are similar, and different second questions of the plurality of second questions carry different prompts. That the first device obtains the second information corresponding to the first information may include: The first device obtains a plurality of reference answers that are in a one-to-one correspondence with the plurality of second questions, and determines the second answer based on the plurality of reference answers, where all of the plurality of reference answers are obtained by the deep learning model.

In this implementation, the plurality of second questions are input to the deep learning model, different second questions of the plurality of second questions carry different prompts, the plurality of reference answers are obtained based on the plurality of different prompts, and then the final second answer can be obtained from the plurality of reference answers. This improves rigor in obtaining the final second answer, and helps improve accuracy of the finally obtained second question.

In a possible implementation, that the first device determines the second answer based on the plurality of reference answers may include: The first device determines the second answer based on the plurality of reference answers according to a majority voting policy. To be specific, the finally determined second answer is included in the plurality of reference answers.

According to a second aspect, this application provides an information processing method that may be applied to the autonomous driving field in the artificial intelligence field. In the method, a first device inputs a first question to a deep learning model, obtains a first answer corresponding to the first question, and determines a second question based on the first answer, where the second question carries information in the first answer. The first device inputs the second question to the deep learning model, and obtains a second answer corresponding to the second question, where the first question and the second question correspond to a same traffic scene.

For example, the first question may include a prompt. Optionally, the first question may further include first feature information. The first feature information includes feature information of information about an environment around an ego vehicle. The information about the environment includes physical attribute information of an object around the ego vehicle. Optionally, the first feature information further includes feature information of driving behavior information of the ego vehicle and/or feature information of navigation information of the ego vehicle.

Optionally, the first question and the second question may be used to obtain information at different levels from a target traffic scene. For example, the first question is used to obtain basic attribute information and semantic information in the traffic scene. For another example, the first question is used to obtain behavior of an object in the target traffic scene or a relationship between different objects.

In a possible implementation, the second answer corresponds to any one of the following tasks: identifying a risky obstacle around the ego vehicle, identifying behavior of an object around the ego vehicle, predicting behavior of an object around the ego vehicle, predicting a trajectory of an object around the ego vehicle, making a decision on behavior of the ego vehicle, planning a trajectory for the ego vehicle, or controlling the ego vehicle. In this embodiment of this application, a plurality of tasks performed by the deep learning model are provided, to improve implementation flexibility of the solution.

In the second aspect, the first device is further configured to perform the steps performed by the first device in the first aspect and the possible implementations of the first aspect. For meanings of terms and specific implementations of steps in the second aspect of this application and the possible implementations of the second aspect, and beneficial effects of each possible implementation, refer to the descriptions in the possible implementations of the first aspect. Details are not described herein again.

According to a third aspect, this application provides an information processing method that may be applied to the autonomous driving field in the artificial intelligence field. The method is used to train a deep learning model. The deep learning model includes at least two training phases. The at least two training phases include a first training phase and a second training phase. In the method, in the first training phase, a training device inputs a third question to the deep learning model, and obtains a predicted answer corresponding to the third question; and in the second training phase, the training device inputs a fourth question to the deep learning model, and obtains a predicted answer corresponding to the fourth question. A first loss function is used to train the deep learning model. In the first training phase, the first loss function indicates a similarity between the predicted answer and an expected answer that correspond to the third question. In the second training phase, the first loss function indicates a similarity between the predicted answer and an expected answer that correspond to the fourth question. Both the third question and the fourth question are related to a traffic scene. The third question and the fourth question are used to obtain information at different levels.

In this implementation, the deep learning model is trained in the at least two training phases, the third question and the fourth question are respectively used in the at least two training phases, and the third question and the fourth question are used to obtain information at different levels from the traffic scene. That is, a progressive training mode is used during training of the deep learning model. This helps the deep learning model learn logical thinking of stepwise inference, to improve human-like nature of the deep learning model, and also helps a trained deep learning model more properly perform an autonomous driving-related task.

In a possible implementation, the third question includes first feature information, the first feature information includes feature information of information about an environment around an ego vehicle, and the information about the environment includes physical attribute information of an object around the ego vehicle.

In a possible implementation, before the training device inputs the third question to the deep learning model, the method further includes: The training device inputs the information about the environment to a feature extraction network, to obtain second feature information generated by the feature extraction network, where the second feature information is used to obtain the first feature information; and inputs the first feature information to a feature processing network, to obtain predicted information generated by the feature processing network, where the feature extraction network and the feature processing network belong to a same neural network, and the neural network is configured to perform at least the following plurality of tasks: predicting a trajectory of an object around the ego vehicle, making a decision on behavior of the ego vehicle, planning a trajectory for the ego vehicle, predicting a speed range of the ego vehicle, or controlling the ego vehicle. A training phase of the deep learning model includes training the deep learning model and the neural network by using the first loss function and a second loss function. The second loss function indicates a similarity between the predicted information and second expected information that correspond to the information about the environment.

In the third aspect, the training device is further configured to perform the steps performed by the first device in the first aspect and the possible implementations of the first aspect. For meanings of terms and specific implementations of steps in the third aspect of this application and the possible implementations of the third aspect, and beneficial effects of each possible implementation, refer to the descriptions in the possible implementations of the first aspect. Details are not described herein again.

According to a fourth aspect, this application provides an information processing apparatus that may be used in the autonomous driving field in the artificial intelligence field. The information processing apparatus includes: an input module, configured to input, to a deep learning model, first information corresponding to a traffic scene around an ego vehicle, where the first information includes first text information; and an obtaining module, configured to obtain second information corresponding to the first information, where the second information is obtained based on the deep learning model, and the second information corresponds to any one of the following tasks: making a decision on behavior of the ego vehicle, planning a trajectory for the ego vehicle, or controlling the ego vehicle.

In the fourth aspect, the information processing apparatus is further configured to perform the steps performed by the first device in the first aspect and the possible implementations of the first aspect. For meanings of terms and specific implementations of steps in the fourth aspect of this application and the possible implementations of the fourth aspect, and beneficial effects of each possible implementation, refer to the descriptions in the possible implementations of the first aspect. Details are not described herein again.

According to a fifth aspect, this application provides an information processing apparatus that may be used in the autonomous driving field in the artificial intelligence field. The information processing apparatus includes: an input module, configured to input a first question to a deep learning model, and obtain a first answer corresponding to the first question; and a determining module, configured to determine a second question based on the first answer, where the second question carries information in the first answer. The input module is further configured to input the second question to the deep learning model, and obtain a second answer corresponding to the second question, where the first question and the second question correspond to a same traffic scene.

In the fifth aspect, the information processing apparatus is further configured to perform the steps performed by the first device in the first aspect and the possible implementations of the first aspect. For meanings of terms and specific implementations of steps in the fifth aspect of this application and the possible implementations of the fifth aspect, and beneficial effects of each possible implementation, refer to the descriptions in the possible implementations of the first aspect. Details are not described herein again.

According to a sixth aspect, this application provides an information processing apparatus that may be used in the autonomous driving field in the artificial intelligence field. The apparatus is configured to train a deep learning model. The deep learning model includes at least two training phases. The at least two training phases include a first training phase and a second training phase. The apparatus includes: an input module, configured to: in the first training phase, input a third question to the deep learning model, and obtain a predicted answer corresponding to the third question. The input module is further configured to: in the second training phase, input a sixth question to the deep learning model, and obtain a predicted answer corresponding to the sixth question. A first loss function is used to train the deep learning model. In the first training phase, the first loss function indicates a similarity between the predicted answer and an expected answer that correspond to the third question. In the second training phase, the first loss function indicates a similarity between the predicted answer and an expected answer that correspond to the sixth question. Both the third question and the sixth question are related to a traffic scene. The third question and the sixth question are used to obtain information at different levels.

In the sixth aspect, the information processing apparatus is further configured to perform the steps performed by the training device in the third aspect and the possible implementations of the third aspect. For meanings of terms and specific implementations of steps in the sixth aspect of this application and the possible implementations of the sixth aspect, and beneficial effects of each possible implementation, refer to the descriptions in the possible implementations of the third aspect. Details are not described herein again.

According to a seventh aspect, an embodiment of this application provides a device, including a processor and a memory. The processor is coupled to the memory. The memory is configured to store a program. The processor is configured to execute the program in the memory, to enable the device to perform the method according to the first aspect, the second aspect, or the third aspect.

According to an eighth aspect, an embodiment of this application provides a vehicle, including a processor and a memory. The processor is coupled to the memory. The memory is configured to store a program. The processor is configured to execute the program in the memory, to enable the vehicle to perform the method according to the first aspect or the second aspect.

According to a ninth aspect, this application provides a computer-readable storage medium. The computer-readable storage medium stores a computer program. When the computer program runs on a computer, the computer is enabled to perform the method according to the first aspect, the second aspect, or the third aspect.

According to a tenth aspect, this application provides a circuit system. The circuit system includes a processing circuit. The processing circuit is configured to perform the method according to the first aspect, the second aspect, or the third aspect.

According to an eleventh aspect, this application provides a computer program product. The computer program product includes a computer program. When the computer program runs on a computer, the computer is enabled to perform the method according to the first aspect, the second aspect, or the third aspect.

According to a twelfth aspect, this application provides a chip system. The chip system includes a processor, configured to implement the functions in the foregoing aspects, for example, sending or processing the data and/or the information in the foregoing methods. In a possible design, the chip system further includes a memory. The memory is configured to store program instructions and data that are necessary for a server or a communication device. The chip system may include a chip, or may include a chip and another discrete component.

### BRIEF DESCRIPTION OF DRAWINGS

FIG. 1 is a diagram of a structure of a main framework of artificial intelligence according to an embodiment of this application;
FIG. 2 is a diagram of a system architecture of a data processing system according to an embodiment of this application;
FIG. 3 is a schematic flowchart of an information processing method according to an embodiment of this application;
FIG. 4 is a diagram of a deep learning model according to an embodiment of this application;
FIG. 5a is a diagram of first information according to an embodiment of this application;
FIG. 5b is another diagram of first information according to an embodiment of this application;
FIG. 6 is a diagram of obtaining first information by a vehicle according to an embodiment of this application;
FIG. 7A and FIG. 7B are another schematic flowchart of an information processing method according to an embodiment of this application;
FIG. 8 is a diagram of a candidate answer according to an embodiment of this application;
FIG. 9 is a diagram of a traffic scene according to an embodiment of this application;
FIG. 10 is another schematic flowchart of an information processing method according to an embodiment of this application;
FIG. 11 is a diagram of a plurality of second questions according to an embodiment of this application;
FIG. 12 is a diagram of a structure of an information processing apparatus according to an embodiment of this application;
FIG. 13 is a diagram of another structure of an information processing apparatus according to an embodiment of this application;
FIG. 14 is a diagram of another structure of an information processing apparatus according to an embodiment of this application;
FIG. 15 is a diagram of a structure of a device according to an embodiment of this application;
FIG. 16 is a diagram of a structure of a vehicle according to an embodiment of this application; and
FIG. 17 is a diagram of a structure of a chip according to an embodiment of this application.

### DESCRIPTION OF EMBODIMENTS

The following describes embodiments of this application with reference to the accompanying drawings. It can be learned by a person of ordinary skill in the art that the technical solutions provided in embodiments of this application are also applicable to similar technical problems with development of technologies and emergence of a new scenario.

In this specification, the claims, and the accompanying drawings of this application, the terms "first", "second", and the like are intended to distinguish between similar objects but do not necessarily indicate a specific order or sequence. It should be understood that the terms used in this way are interchangeable in proper circumstances and are merely intended for distinguishing when objects having a same attribute are described in embodiments of this application. In addition, the terms "include", "have", and any variants thereof are intended to cover non-exclusive inclusion, so that a process, a method, a system, a product, or a device that includes a series of units is not necessarily limited to the units, but may include other units that are not clearly listed or are inherent to the process, the method, the product, or the device.

In embodiments of this application, "sending" and "receiving" represent signal transfer directions. For example, "sending information to an XX device" may be understood as that a destination end of the information is the XX device, and may include direct sending through an air interface, or include indirect sending via another unit or module through an air interface. "Receiving information from a YY device" may be understood as that a source end of the information is the YY device, and may include direct receiving from the YY device through an air interface, or may include indirect receiving from the YY device via another unit or module through an air interface. The "sending" may also be understood as "outputting" of a chip interface, and the "receiving" may also be understood as "inputting" of the chip interface. In other words, sending and receiving may be performed between devices, or may be performed within a device. For example, sending or receiving is performed between components, modules, chips, software modules, or hardware modules in a device through a bus, a wire, or an interface. It can be understood that necessary processing, for example, encoding or modulation, may be performed on information between a source end that sends the information and a destination end, but the destination end can understand valid information from the source end. Similar descriptions in this application may be understood similarly, and details are not described again.

In embodiments of this application, an "indication" may include a direct indication and an indirect indication, or may include an explicit indication and an implicit indication. Information indicated by specific information (for example, indication information in the following descriptions) is referred to as to-be-indicated information. In this case, during specific implementation, the to-be-indicated information may be indicated in a plurality of manners, for example, but not limited to: The to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and a remaining part of the to-be-indicated information is known or pre-agreed upon. For example, specific information may be indicated by an arrangement sequence of a plurality of pieces of information that is pre-agreed upon (for example, predefined in a protocol), to reduce indication overheads to some extent. A specific indication manner is not limited in this application. It can be understood that, for a transmitter of the indication information, the indication information may indicate the to-be-indicated information, and for a receiver of the indication information, the indication information may be used to determine the to-be-indicated information.

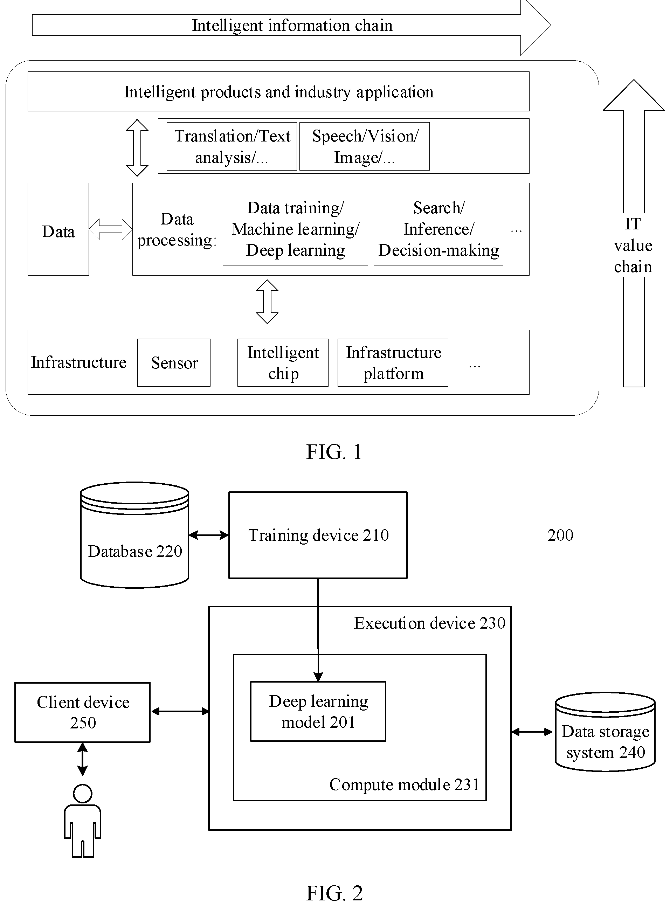

First, an overall operation process of an artificial intelligence system is described. FIG. 1 is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" indicates a process from data obtaining to data processing. For example, the process may be a general process of intelligent information perception, intelligent information representation and formation, intelligent inference, intelligent decision-making, and intelligent execution and output. In this process, data undergoes a refinement process of "data-information-knowledge-intelligence". The "IT value chain" indicates value brought by artificial intelligence to the information technology industry in a process from underlying infrastructure and information (implemented by providing and processing technologies) of artificial intelligence to industrial ecology of a system.

### (1) Infrastructure

The infrastructure provides computing capability support for the artificial intelligence system, implements communication with the outside world, and implements support through an infrastructure platform. The infrastructure communicates with the outside through a sensor. A computing capability is provided by an intelligent chip. The intelligent chip may be specifically a hardware acceleration chip such as a central processing unit (central processing unit, CPU), an embedded neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA). The infrastructure platform includes related platform assurance and support such as a distributed computing framework and a network, and may include cloud storage and computing, an interconnection and interworking network, and the like. For example, the sensor communicates with the outside to obtain data, and the data is provided for an intelligent chip in a distributed computing system provided by the infrastructure platform to perform computing.

### (2) Data

Data at an upper layer of the infrastructure indicates a data source in the artificial intelligence field. The data relates to graphics, images, speech, and text, and further relates to internet of things data of conventional devices, including service data of an existing system and sensory data such as force, displacement, a liquid level, temperature, and humidity.

### (3) Data processing

The data processing usually includes data training, machine learning, deep learning, searching, inference, decision-making, and the like.

The machine learning and the deep learning may be used for performing symbolic and formal intelligent information modeling, extraction, preprocessing, training, and the like on data.

The inference is a process of performing machine thinking and solving problems by simulating an intelligent inference mode of humans in a computer or intelligent system by using formal information and according to an inference control policy. A typical function is searching and matching.

The decision-making is a process of making a decision after intelligent information is inferred, and usually provides classification, ranking, prediction, and other functions.

### (4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

### (5) Intelligent products and industry application

The intelligent products and the industry application are products and application of the artificial intelligence system in various fields, are obtained by packaging an overall artificial intelligence solution, and implement productization and practical application of intelligent information decision-making. Application fields of the artificial intelligence system include intelligent terminals, intelligent manufacturing, intelligent transportation, smart home, intelligent healthcare, intelligent security protection, autonomous driving, smart city, and the like.

A method provided in this application may be applied to the autonomous driving field. For example, in the method provided in this application, a deep learning model capable of processing text information is used in the autonomous driving field. Before the method provided in this application is described in detail, refer to FIG. 2. FIG. 2 is a diagram of a system architecture of a data processing system according to an embodiment of this application. In FIG. 2, the data processing system 200 includes a training device 210, a database 220, an execution device 230, a data storage system 240, and a client device 250. The execution device 230 includes a compute module 231.

The database 220 stores a training data set. In a training phase of a deep learning model 201, the training device 210 generates the deep learning model 201, and performs iterative training on the deep learning model 201 by using the training data set, to obtain a deep learning model 201 that has undergone a training operation. The deep learning model 201 may be specifically represented as a neural network, or may be represented as a non-neural-network model. In this embodiment of this application, descriptions are provided only by using an example in which the deep learning model 201 is represented as a neural network.

The deep learning model 201 that is obtained by the training device 210 and that has undergone the training operation may be deployed in the compute module 231 of the execution device 230. The execution device 230 may invoke data, code, and the like in the data storage system 240, and may also store data, instructions, and the like into the data storage system 240. The data storage system 240 may be deployed on the execution device 230, or the data storage system 240 may be an external memory relative to the execution device 230.

In an application phase of the deep learning model 201 that has undergone the training operation, after inputting first information to the deep learning model 201 in the compute module 231, the execution device 230 may obtain second information output by the deep learning model 201. The first information includes first text information, and information specifically carried in the second information is related to a type of a task (subsequently referred to as a "first task" for ease of description) performed by the deep learning model 201.

In some embodiments of this application, as shown in FIG. 2, the execution device 230 and the client device 250 may be independent devices, and the execution device 230 is provided with an input/output (I/O) interface to exchange data with the client device 250. After determining the first information, the client device sends the first information to the execution device 230 through the I/O interface. After generating, by using the deep learning model 201 in the compute module 231, the second information corresponding to the first information, the execution device 230 may return the second information to the client device through the I/O interface.

It should be noted that FIG. 2 is merely a diagram of an architecture of a data processing system according to an embodiment of the present invention, and a positional relationship between devices, components, modules, and the like shown in the figure does not constitute any limitation. For example, in some other embodiments of this application, the execution device 230 and the client device may be integrated into a same device. In this case, a user may directly interact with the execution device 230. For example, the execution device 230 may be a module, in a host processor (Host CPU) of the client device, that processes data by using the deep learning model. Alternatively, the execution device 230 may be a graphics processing unit (graphics processing unit, GPU) or a neural-network processing unit (NPU) in the client device. The GPU or the NPU is mounted to the host processor as a coprocessor, and the host processor allocates a task to the GPU or the NPU.

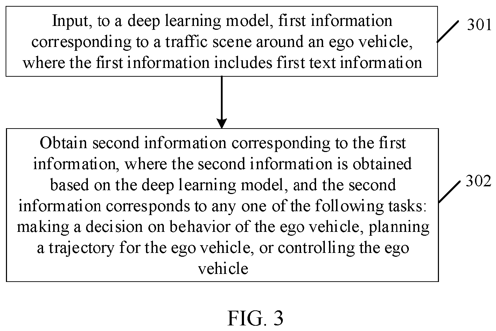

With reference to the foregoing descriptions, this application provides an information processing method. Specifically, FIG. 3 is a schematic flowchart of an information processing method according to an embodiment of this application.

301: Input, to a deep learning model, first information corresponding to a traffic scene around an ego vehicle, where the first information includes first text information.

In this embodiment of this application, before a first device inputs, to the deep learning model, the first information corresponding to the traffic scene around the ego vehicle, the vehicle needs to first obtain the first information. In a case, the first device is a vehicle. If the deep learning model that has undergone a training operation is deployed on the vehicle (to be specific, the vehicle is also an execution device of the deep learning model that has undergone the training operation), step 301 includes: The vehicle inputs, to the locally deployed deep learning model, the first information corresponding to the traffic scene around the ego vehicle.

In another case, the first device is a vehicle. If the deep learning model that has undergone a training operation is deployed on a cloud server (to be specific, a device of the deep learning model that has undergone the training operation is the cloud server), step 301 may include: The first device sends, to the cloud server on which the deep learning model is deployed, the first information corresponding to the traffic scene around the ego vehicle.

In another case, the first device is a cloud server on which the deep learning model is deployed. In this case, step 301 may include: After receiving the first information that corresponds to the traffic scene around the ego vehicle and that is sent by the vehicle, the first device inputs the first information to the deep learning model.

For example, the deep learning model may be specifically an attention (attention) mechanism-based machine learning model, or the deep learning model may be a recurrent neural network, a convolutional neural network, a fully connected neural network, another type of machine learning model, or the like. This is not limited herein.

For example, when the deep learning model is specifically the attention mechanism-based machine learning model, the deep learning model may include N first neural network modules, where N is an integer greater than or equal to 1, and each first neural network module is an attention mechanism-based neural network module. The deep learning model may further include another neural network layer. For example, the another neural network layer may include a linear (Linear) neural network layer, a neural network layer for normalization, or another neural network layer. It should be noted that a specific composition form of the deep learning model may be flexibly determined based on an actual application scenario. The example herein is merely intended for ease of understanding the solution, and is not intended to limit the solution.

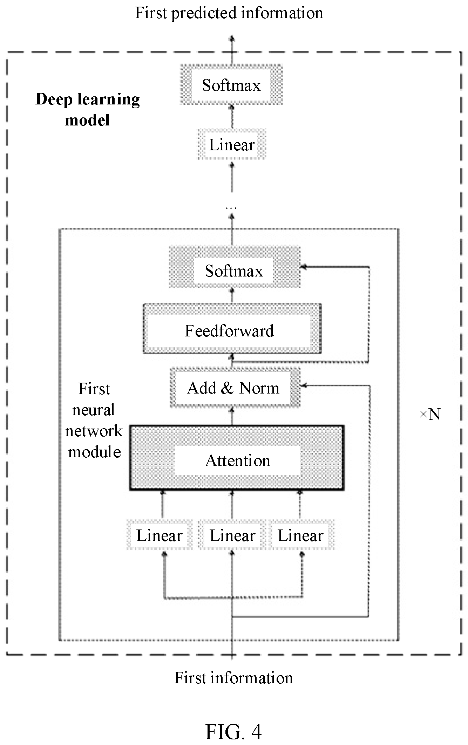

For more intuitive understanding of the solution, refer to FIG. 4. FIG. 4 is a diagram of a deep learning model according to an embodiment of this application. As shown in FIG. 4, the deep learning model may include N first neural network modules, and the deep learning model may further include a normalized exponential activation function (Softmax) layer, a linear (Linear) fully connected layer, and another neural network layer.

Each first neural network module is an attention mechanism-based neural network module. As shown in FIG. 4, each first neural network module may include three different linear layers, an attention (Attention) mechanism-based neural network layer, a residual connection and normalization (Add & Norm) layer, a feedforward (Feedforward) neural network layer, and a softmax layer. FIG. 4 further shows an information processing sequence in each first neural network module. It should be understood that the example in FIG. 4 is merely intended for ease of understanding the solution, and is not intended to limit the solution.

The first information includes the first text information, and the first text information may correspond to a task (subsequently referred to as a "first task" for ease of description) performed by the deep learning model. The first text information may prompt the deep learning model to generate predicted information corresponding to the first task. For example, the first information may be specifically represented as a second question, and the first text information may be specifically represented as information about a prompt (Prompt) in the second question. It should be understood that the term "first question" is to appear in a subsequent step, and is not described herein.

Optionally, the first information further includes first feature information, the first feature information includes feature information of information about an environment around the ego vehicle, and the information about the environment around the ego vehicle includes physical attribute information of an object around the ego vehicle. For example, the information about the environment around the ego vehicle may include physical attribute information, in each of one or more frames of images (or point cloud data), of the object around the ego vehicle.

For example, the object around the ego vehicle may include a dynamic obstacle around the ego vehicle, a static obstacle around the ego vehicle, a traffic index line around the ego vehicle, a traffic sign around the ego vehicle, or another type of object. For example, the dynamic obstacle may be another vehicle, a pedestrian, an electric vehicle, or another dynamic obstacle around the ego vehicle; the static obstacle may be a house, a fence, grass, or another static obstacle around the ego vehicle; the traffic index line may be a stop line, a pedestrian crosswalk, or another traffic sign line; and the traffic sign may be a traffic light, a speed limit signpost, or another traffic sign. This may be specifically determined based on an actual application scenario, and is not limited herein.

For example, physical attribute information of the dynamic obstacle may include a category, a location, a speed, an orientation, a height, a color, a shape, or another type of physical attribute information of the dynamic obstacle; physical attribute information of the static obstacle may include a category, a location, an orientation, a height, a material, a shape, a color, or other physical attribute information of the static obstacle; physical attribute information of the traffic index line may include a category, a location, a shape, a color, or other physical attribute information of the traffic index line; and a physical attribute of the traffic sign may include a category, a location, a shape, or a color of the traffic sign, or content or other physical attribute information of the traffic sign. It should be noted that the example physical attribute information herein is merely intended for ease of understanding the solution, and is not intended to limit the solution.

Optionally, the first feature information further includes feature information of driving behavior information of the ego vehicle and/or feature information of navigation information of the ego vehicle. For example, the driving behavior information of the ego vehicle may indicate vehicle driving behavior information of the ego vehicle in each of one or more frames of images (or point cloud data), and the navigation information also includes navigation information in each of one or more frames of images (or point cloud data). For example, the driving behavior information of the ego vehicle may include a speed, an acceleration, an orientation, a location, or other information of the ego vehicle, and the navigation information may include a location of a navigation line, a direction indicated by a navigation line, a shape of a navigation line, or other information. This may be specifically determined based on an actual case, and is not limited herein.

A process of obtaining the first information by the vehicle may include: The vehicle obtains the first feature information. In terms of a specific implementation process of obtaining the first feature information by the vehicle, for example, the first feature information may be obtained based on a feature extraction network (subsequently referred to as a "first feature extraction network" for ease of description). For example, the vehicle may input, to the first feature extraction network, the information about the environment around the ego vehicle. Optionally, the vehicle may further input the driving behavior information and/or the navigation information of the ego vehicle to the first feature extraction network, to obtain third feature information generated by the first feature extraction network, and then obtain the first feature information. The "third feature information" may also be understood as hidden-layer feature information of the information about the environment around the ego vehicle (which may optionally further include the driving behavior information and/or the navigation information of the ego vehicle).

Further, in a case, the "third feature information" and the "first feature information" have a same meaning. To be specific, the vehicle may directly use the third feature information generated by the first feature extraction network as the first feature information.

In another case, after obtaining the third feature information, the vehicle may further input the third feature information to a second feature extraction network, and perform a feature update on the third feature information through the second feature extraction network, to obtain the first feature information. For example, the third feature information may be specifically represented in a feature map (feature map) form, and the first feature information may be specifically represented in a token (token) form. To be specific, the second feature extraction network may convert the third feature information in the feature map form into the first feature information in the token form. Because the deep learning model is a machine learning model for processing text information, if the first feature information in the token form is obtained and then input to the deep learning model, it is easier for the deep learning model to understand the first feature information. This reduces difficulty in understanding the first feature information by the deep learning model, and helps improve accuracy of information output by the deep learning model.

For example, the second feature extraction network may be specifically represented as an attention (attention) mechanism-based neural network, a convolutional neural network, a fully connected neural network, or another type of neural network. A specific representation form of the second feature extraction network may be determined based on an actual application scenario. This is not limited in this embodiment of this application.

The first feature extraction network belongs to a first neural network, and the first neural network may further include a first feature processing network. For example, the first neural network may be specifically represented as an attention mechanism-based neural network, a convolutional neural network, a fully connected neural network, or another type of neural network. This may be specifically determined based on an actual application scenario, and is not limited herein. For example, the first feature extraction network may also be referred to as an encoder (encoder), and the first feature processing network may also be referred to as a decoder (decoder).

For example, the first neural network is configured to perform at least one of the following tasks: predicting a trajectory of an object around the ego vehicle, making a decision on behavior of the ego vehicle, planning a trajectory for the ego vehicle, predicting a speed range of the ego vehicle, controlling the ego vehicle, or another task. Optionally, the first neural network is configured to perform at least two of the foregoing plurality of tasks.

In this embodiment of this application, the first information includes both the first text information and the first feature information, and the first feature information includes the feature information of the information about the environment around the ego vehicle. Therefore, the deep learning model can determine the second information fully based on the feature information of the information about the environment around the ego vehicle. This helps improve appropriateness of the second information output by the deep learning model.

In addition, if the first neural network is configured to perform at least two of a plurality of tasks of predicting a trajectory of an object around the ego vehicle, making a decision on behavior of the ego vehicle, planning a trajectory for the ego vehicle, predicting a speed range of the ego vehicle, or controlling the ego vehicle, the first feature information needs to cover more abundant information. In other words, the first information including the first feature information covers more information. This helps the deep learning model obtain more information, and further helps improve accuracy of information output by the deep learning model.

A process of obtaining the first information by the vehicle includes: The vehicle obtains the first text information.

In terms of a specific implementation process of obtaining the first text information by the vehicle, in a case, the first text information includes information about preset text of the first task performed by the deep learning model.

For example, preset text corresponding to each of at least one second task may be deployed on the vehicle. Optionally, when the first information is specifically represented as the second question, each piece of preset text may also be understood as a preset prompt. The at least one second task may include any one or more of the following tasks: making a decision on behavior of the ego vehicle, planning a trajectory for the ego vehicle, controlling the ego vehicle, or another task. Examples are not exhaustively listed herein.

To further understand a relationship between the terms "decision", "planning a trajectory", and "controlling", the terms are further explained herein. For example, the "making a decision on behavior of the ego vehicle" means making a decision from a perspective of behavior of the vehicle. For example, the "making a decision on behavior of the ego vehicle" may be specifically represented as turning left at an intersection in front. For another example, the "making a decision on behavior of the ego vehicle" may be specifically represented as overtaking a vehicle in front or other behavior. Examples are not exhaustively listed herein.

The "planning a trajectory for the ego vehicle" may also be referred to as "planning a path for the ego vehicle". The "planning a trajectory for the ego vehicle" means determining, based on the decision on the behavior of the ego vehicle, a path for implementing the behavior on which the decision is made (this may also be understood as "determining a trajectory for implementing the behavior"). For example, the decision on the behavior of the ego vehicle is to turn left at the intersection in front, and planning the trajectory for the ego vehicle may be determining a path that the ego vehicle should use to implement the behavior of "turning left at the intersection in front". For another example, the decision on the behavior of the ego vehicle is to overtake the vehicle in front, and planning the trajectory for the ego vehicle may be determining a path that the ego vehicle should use to implement the behavior of "overtaking the vehicle in front".

The "controlling the ego vehicle" indicates a control instruction for a component of the vehicle, to implement the trajectory planned for the ego vehicle. The "control instruction for a component of the vehicle" may also be referred to as a "vehicle control instruction". For example, the "controlling the ego vehicle" may be specifically represented as a control instruction for controlling an angle of a steering wheel, controlling a degree of stepping on an accelerator, controlling a degree of stepping on a brake, or controlling another component of the vehicle. Examples are not exhaustively listed herein.

For example, preset text corresponding to the task of "making a decision on the ego vehicle" may be: "What interactive behavior is to be performed by the ego vehicle next and why is the behavior to be performed?", "What behavior is to be performed by the ego vehicle and why?", "What behavior is to be immediately performed by the vehicle?", or other preset text corresponding to the task of "making a decision on the ego vehicle".

Preset text corresponding to the task of "planning a path for the ego vehicle" may be: "What path is planned for the vehicle?", "What path is the vehicle to follow next?", "What is the subsequent trajectory of the vehicle?", or other preset text corresponding to the task of "planning a path for the ego vehicle".

Preset text corresponding to the task of "controlling the ego vehicle" may be: "Determine a vehicle control instruction", "How should the vehicle be controlled to travel?", "How should components of the vehicle be controlled?", "Would you provide a control instruction set for the vehicle?", or other preset text corresponding to the task of "controlling the ego vehicle". It should be noted that the example preset text herein is merely intended for ease of understanding the solution, and is not intended to limit the solution.

When the vehicle needs to perform a first task of the at least one second task, the vehicle is triggered to automatically obtain the first information, to be specific, the vehicle is triggered to automatically obtain the first text information. That the vehicle obtains the first text information may include: The vehicle obtains, from preset text corresponding to the at least one second task, one or more pieces of preset text corresponding to the first task, to obtain one or more pieces of first text information, where each piece of first text information includes information about one piece of preset text.

For example, in this scenario, the first text information may include initial feature information of the preset text that is obtained by performing feature extraction on the preset text. The "feature extraction" may also be understood as "initial encoding", or the "feature extraction" may also be understood as vectorization (embedding). For example, the initial feature information of the preset text may be specifically represented in a token (token) form.

In another case, the first text information may alternatively include information about text (subsequently referred to as "first text" for ease of differentiation) entered by a user. To be specific, the first text entered by the user may trigger the vehicle to obtain the first information. For example, the vehicle may receive any text (subsequently referred to as "second text" for ease of differentiation) entered by the user. When it is determined that the second text entered by the user corresponds to the at least one second task, it can be determined that the second text is the first text, the vehicle is triggered to obtain the first information, and then step 301 is performed.

For example, in this scenario, the first text information may be initial feature information of the first text entered by the user that is obtained by performing feature extraction on the first text, and the "feature extraction" may also be understood as "initial encoding". For example, the initial feature information of the first text may be specifically represented in a token (token) form.

In terms of a specific implementation of obtaining, by the vehicle, the first text entered by the user, for example, in an implementation, the vehicle may provide, for the user, a receive icon (which may alternatively be replaced with a "button") corresponding to a first function. The first function is used for the user to learn of a decision status, a trajectory planning status, or a vehicle control status during autonomous driving. In this case, after the user taps the receive icon (or the "button") corresponding to the first function, the vehicle may receive the first text entered by the user, and determine that the first text entered by the user corresponds to the at least one second task, and then the vehicle is triggered to obtain the first information.

In another implementation, a first machine learning model that has undergone a training operation may be pre-deployed on the vehicle. The first machine learning model is used to determine whether the text entered by the user corresponds to one or more of the at least one second task. For example, the first machine learning model may be specifically represented as a machine learning model for performing a classification function among N categories. The N categories may include each second task and being irrelevant. The vehicle may receive any text (namely, the second text) entered by the user, and input the second text to the first machine learning model, to obtain predicted information output by the first machine learning model. The predicted information indicates a category, among the N categories, to which the second text entered by the user belongs. If it is determined, based on the predicted information output by the first machine learning model, that the second text belongs to any one of the at least one second task, it is determined that the second text is the first text, and then the vehicle is triggered to obtain the first information.

It should be noted that another manner may alternatively be used to trigger, based on the first text entered by the user, the vehicle to obtain the first information. The examples herein are merely intended to testify implementability of the solution, and are not intended to limit the solution.

After obtaining the first text information and the first feature information, the vehicle may combine the first text information and the first feature information to obtain combined information. For example, a manner of the "combining" may be concatenation. In this case, the first text information and the first feature information are clearly delimited. Alternatively, the first text information in the token form and the first feature information in the token form may be combined through mixing. To be specific, the first text information and the first feature information are not clearly delimited. Alternatively, the first text information and the first feature information may be combined in another manner. This is not limited in this embodiment of this application.

In a case, the "combined information" may be directly used as the "first information". In another case, the vehicle may perform type encoding (type encoding) on the combined information to obtain the first information. A purpose of performing type encoding is to indicate that the first text information and the first feature information are information of different types (which may also be referred to as "different modes").

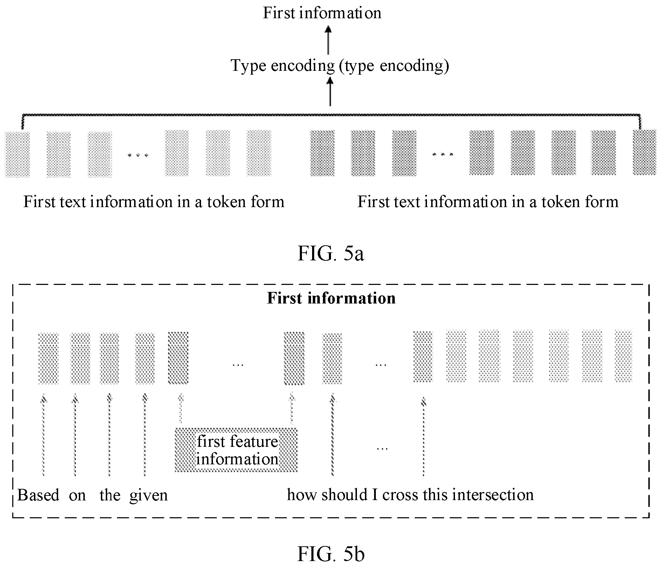

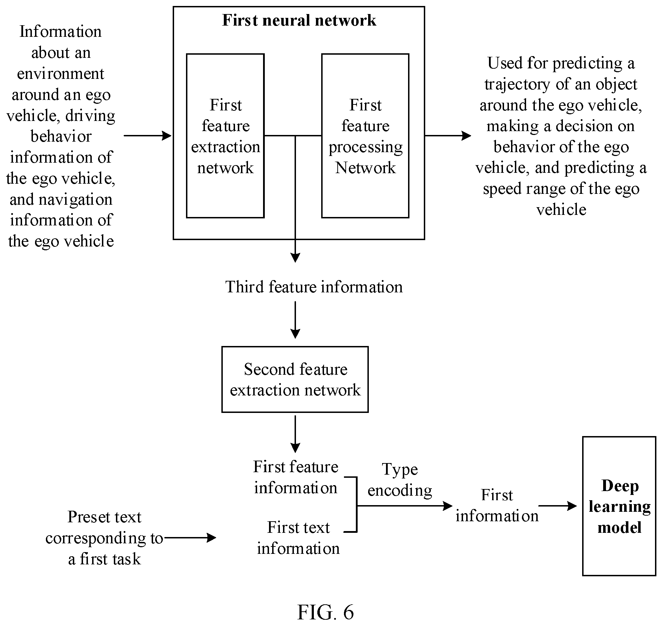

For more intuitive understanding of the solution, refer to FIG. 5a, FIG. 5b, and FIG. 6. FIG. 5a is a diagram of first information according to an embodiment of this application, FIG. 5b is another diagram of first information according to an embodiment of this application, and FIG. 6 is a diagram of obtaining first information by a vehicle according to an embodiment of this application. First, refer to FIG. 5a. FIG. 5a shows a manner in which the first text information in the token form and the first feature information in the token form are completely delimited. In FIG. 5a, the first text information in the token form and the first feature information in the token form are concatenated in a manner in which the first text information in the token form is placed before the first feature information in the token form, to obtain combined information. Then type encoding (type encoding) is performed on the combined information to obtain the first information. It should be understood that the example in FIG. 5a is merely intended for ease of understanding the solution, and is not intended to limit the solution.

Further, refer to FIG. 5b. FIG. 5b shows an example in which the first text information in the token form and the first feature information in the token form are combined through mixing. FIG. 5b shows a manner in which the first text information and the first feature information are mixed according to logic of language. The first text information is the following information in a token form: "Based on the given ..., how should I cross this intersection?" In this case, the first information obtained by mixing the first text information and the first feature information may be understood as follows: Based on the given <first feature information>, how should I cross this intersection? It should be noted that the text description herein is intended for ease of understanding how the first text information in the token form and the first feature information in the token form are mixed, and is not intended to limit the solution.

Further, refer to FIG. 6. As shown in FIG. 6, a training sample that includes the information about the environment around the ego vehicle, the driving behavior information of the ego vehicle, and the navigation information of the ego vehicle is input to the first feature extraction network, to obtain the third feature information generated by the first feature extraction network. Both the first feature extraction network and the first feature processing network belong to the first neural network. A task that the first neural network is configured to perform includes: predicting a trajectory of an object around the ego vehicle, making a decision on behavior of the ego vehicle, and predicting a speed range of the ego vehicle. The third feature information is input to the second feature extraction network, to obtain the first feature information generated by the second feature extraction network. The preset text corresponding to the first task is obtained, to obtain the first text information. A type encoding (type encoding) operation is performed based on the first text information and the first feature information to obtain the first information. Then the first information is input to the deep learning model. It should be understood that the example in FIG. 6 is merely intended for ease of understanding the solution, and is not intended to limit the solution.

302: Obtain second information corresponding to the first information, where the second information is obtained based on the deep learning model, and the second information corresponds to any one of the following tasks: making a decision on behavior of the ego vehicle, planning a trajectory for the ego vehicle, or controlling the ego vehicle.

In this embodiment of this application, after inputting, to the deep learning model, the first information corresponding to the traffic scene around the ego vehicle, the first device can obtain first predicted information generated by the deep learning model, and obtain, based on the first predicted information, the second information corresponding to the first information. The second information corresponds to any one of the following tasks: making a decision on behavior of the ego vehicle, planning a trajectory for the ego vehicle, controlling the ego vehicle, or another task. To be specific, the second information indicates behavior to be subsequently performed by the ego vehicle, or the second information may include information about a subsequent trajectory of the ego vehicle, or the second information may include a vehicle control instruction for the ego vehicle, or the like. Specific information included in the second information may be determined based on a specific application scenario of the second information. This is not limited herein.

In a case, the first device is a vehicle. If the deep learning model is deployed on the vehicle, step 302 includes: The vehicle obtains the first predicted information output by the locally deployed deep learning model, and then determines the second information based on the first predicted information. In another case, the first device is a vehicle. If the deep learning model is deployed on the cloud server, step 302 may include: The vehicle receives the first predicted information sent by the server on which the deep learning model is deployed, and then determines the second information based on the first predicted information.

In another case, the first device is a server on which the deep learning model is deployed. In this case, step 302 may include: The first device obtains the first predicted information output by the locally deployed deep learning model, determines the second information based on the first predicted information, and sends the second information to the vehicle.

In this embodiment of this application, the deep learning model capable of processing text information is introduced into the autonomous driving field, and based on the second information generated by the deep learning model for processing text information, a decision is made on behavior of the ego vehicle, and a trajectory is planned for the ego vehicle, or the ego vehicle is controlled. Input information of the deep learning model provided in this application includes text information that facilitates understanding by a user. Therefore, interpretability of a running process of the deep learning model is improved, to be specific, a decision-making, trajectory planning, or control process of an autonomous vehicle is more transparent, so that the user can more intuitively understand behavior of the autonomous vehicle.

Based on the embodiment corresponding to FIG. 3, the following starts to describe specific implementation processes of a training phase and an application phase of the deep learning model provided in embodiments of this application.

### 1. Training phase

In embodiments of this application, it can be learned from the foregoing descriptions that, after the training operation on the deep learning model is completed, the first task performed by the deep learning model may be making a decision on behavior of the ego vehicle, planning a trajectory for the ego vehicle, controlling the ego vehicle, or the like. Optionally, an entire training process of the deep learning model may include at least two training phases, and the at least two training phases are used to train a machine learning model to learn information at different levels. This application discloses four different training phases (to be specific, a 1^{st} training phase, a 2^{nd} training phase, a 3^{rd} training phase, and a 4^{th} training phase in subsequent descriptions) of the deep learning model in subsequent steps.

For example, in the 1^{st} training phase, the deep learning model is enabled to learn basic attribute information and semantic information. For example, the deep learning model is enabled to learn basic attribute information such as a speed, a location, or an orientation. For another example, the deep learning model is enabled to learn a reference numeral of an obstacle, a concept of a "frame", a concept of a "second", or other basic semantic information.

In the 2^{nd} training phase, the deep learning model is enabled to learn semantics of directional behavior and/or action behavior of the ego vehicle or an obstacle in a plurality of frames of images (or point cloud data), where for example, the "directional behavior" may be lateral behavior, longitudinal behavior, or other behavior, and the "action behavior" may be acceleration behavior, steering behavior, lane change behavior, or other behavior; and/or the deep learning model is enabled to learn semantics of a relative spatial relationship between different objects in a single frame of image (or point cloud data), for example, learn that an obstacle 1 and an obstacle 2 are a vehicle in front and a vehicle behind, and the obstacle 1 is in a road topology 1.

In the 3^{rd} training phase, the deep learning model is enabled to learn semantics of interactive behavior between different objects. The "interactive behavior" may also be referred to as "gaming behavior", an "interactive relationship", or another name with an equivalent meaning. For example, the "interactive behavior" may be: The obstacle 1 causes pressure to the obstacle 2, and the obstacle 2 laterally moves left for evasion. For another example, the "interactive behavior" may be interactive behavior that the ego vehicle changes a lane to overtake an obstacle 3.

In the 4^{th} training phase, the deep learning model is enabled to learn cause-and-effect and a logical relationship of interactive behavior between different objects. For example, because the obstacle 3 in front of the ego vehicle travels slowly and a lane on the left of the ego vehicle is idle, to improve travel efficiency, the ego vehicle changes a lane for overtaking. It should be noted that the examples herein are merely intended for ease of understanding the solution, and are not intended to limit the solution.

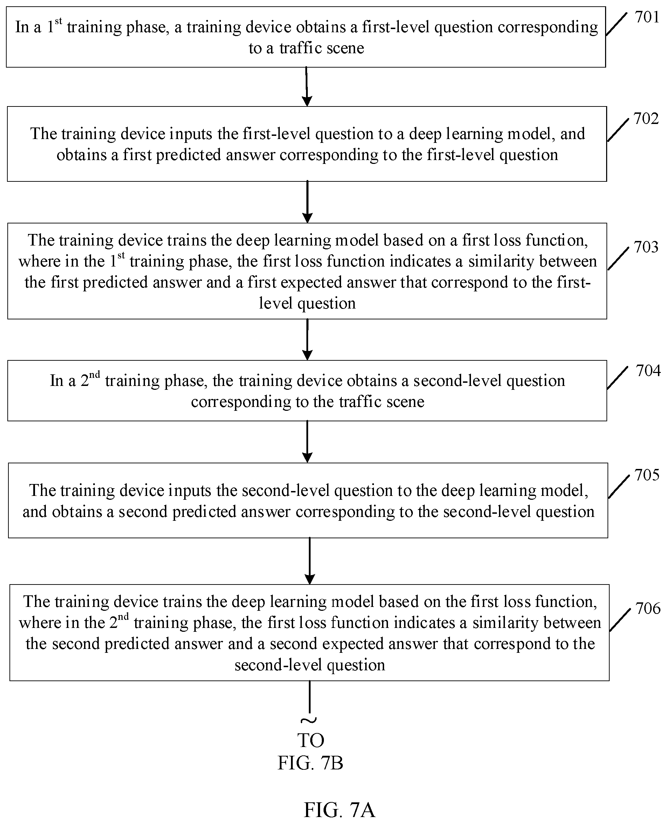

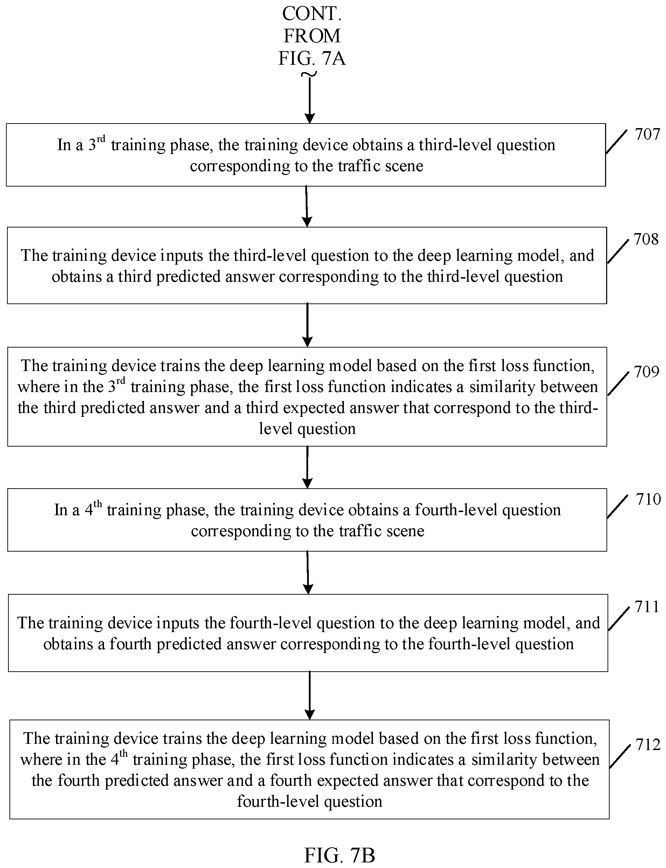

Specifically, FIG. 7A and FIG. 7B are another schematic flowchart of an information processing method according to an embodiment of this application. The information processing method provided in this application may include the following steps.

701: In the 1^{st} training phase, a training device obtains a first-level question corresponding to a traffic scene.

In this embodiment of this application, for example, the "first-level question" includes at least initial feature information of a first prompt, and the "first-level question" may further include first feature information. The first feature information includes feature information of information about an environment around an ego vehicle. The information about the environment includes physical attribute information of an object around the ego vehicle. For a meaning of the "first feature information", refer to the descriptions in the embodiment corresponding to FIG. 3. Details are not described herein again. For example, the first prompt may include at least one mask (MASK), and content of the mask is predicted by the deep learning model. That is, the content of the mask in the first prompt is supplemented by the deep learning model. In the 1^{st} training phase, the deep learning model is enabled to learn basic attribute information and semantic information. Therefore, content of the mask that is predicted by the deep learning model each time may include at least one of the following: a data frame, a reference signal of the ego vehicle or an obstacle, an attribute name, or an attribute value.

For example, the "first prompt" may be specifically represented as follows: "In a frame 0, a travel speed of the ego vehicle is ( )". A part in "( )" is the mask, to be specific, a part that needs to be predicted by the deep learning model. In the foregoing example, an attribute value of the attribute "travel speed" is predicted by the deep learning model. For another example, the "first prompt" may be specifically represented as follows: "In a frame 0, an x coordinate location of the ego vehicle is ( )". In the foregoing example, an attribute value of the attribute "x coordinate location" is predicted by the deep learning model.

For another example, the "first prompt" may be specifically represented as follows: "In a frame -1, a speed of ( ) is 10 m/s". In the foregoing example, a reference numeral of the ego vehicle or an obstacle is predicted by the deep learning model. For another example, the "first prompt" may be specifically represented as follows: "In a frame ( ), a y coordinate location of an obstacle 1 is 2.9 m". In the foregoing example, a data frame is predicted by the deep learning model. For another example, the "first prompt" may be specifically represented as follows: "In a frame -1, ( ) of the ego vehicle is 10 m/s". In the foregoing example, an attribute name is predicted by the deep learning model. It should be noted that the examples herein are merely intended for ease of understanding a concept of the "first prompt", and are not intended to limit the solution.

Step 701 may include: The training device obtains the first prompt, performs feature extraction on the first prompt to obtain the initial feature information of the first prompt, and obtains, based on the first feature information and the initial feature information of the first prompt, the first-level question corresponding to the traffic scene. The "feature extraction" may also be understood as "initial encoding". For example, the initial feature information of the first prompt may be specifically represented in a token (token) form. A specific implementation of "obtaining, by the training device based on the first feature information and the initial feature information of the first prompt, the first-level question corresponding to the traffic scene" is similar to the specific implementation of "generating the first information based on the first text information and the first feature information" in the embodiment corresponding to FIG. 3. A difference lies in that the "first text information" in the embodiment corresponding to FIG. 3 is replaced with the "initial feature information of the first prompt" in step 701, and the "first information" in the embodiment corresponding to FIG. 3 is replaced with the "first-level question" in step 701. The specific implementation of the foregoing step is not described in detail herein again.

In terms of a specific implementation of obtaining the first feature information by the training device, a training data set may be deployed on the training device, and the training data set includes a plurality of training samples. Each training sample may include information about an environment around the ego vehicle. Optionally, each training sample may further include driving behavior information of the ego vehicle and/or navigation information of the ego vehicle. The training device inputs the training sample to a first feature extraction network, to obtain third feature information generated by the first feature extraction network, where the third feature information is used to obtain the first feature information.

It should be noted that, for meanings of the "information about an environment around the ego vehicle", the "driving behavior information of the ego vehicle", the "navigation information of the ego vehicle", the "third feature information", and the "first feature information", reference may be made to the descriptions in the embodiment corresponding to FIG. 3; and for a specific implementation of "obtaining the first feature information based on the third feature information", reference may also be made to the descriptions in the embodiment corresponding to FIG. 3. Details are not described herein again.

Optionally, the training device may further input the first feature information to a first feature processing network, to obtain second predicted information that is generated by the first feature processing network and that corresponds to the training sample (to be specific, second predicted information corresponding to the information about the environment around the ego vehicle). The first feature extraction network and the first feature processing network belong to a same first neural network, and the "second predicted information generated by the first feature processing network" may also be understood as "second predicted information generated by the first neural network".

The first neural network is configured to perform at least one of the following tasks: predicting a trajectory of an object around the ego vehicle, making a decision on behavior of the ego vehicle, planning a trajectory for the ego vehicle, predicting a speed range of the ego vehicle, controlling the ego vehicle, or another task. Optionally, the first neural network is configured to perform at least two of the foregoing plurality of tasks.

In terms of a specific implementation of obtaining the first prompt by the training device, in an implementation, a second neural network may be pre-deployed on the training device, and the training device inputs the training sample to the second neural network, to obtain the first prompt that is generated by the second neural network and that corresponds to a first level. For example, the second neural network may be understood as a generator (generator), and the second neural network may be specifically an attention mechanism-based neural network, a convolutional neural network, a recurrent neural network, or another type of neural network. This is not limited herein.

Optionally, the second neural network may be configured to generate prompts in the 1^{st} training phase, the 2^{nd} training phase, the 3^{rd} training phase, and the 4^{th} training phase. In this case, in the 1^{st} training phase, the training device may input the training sample and a first parameter to the second neural network, to obtain the first prompt generated by the second neural network, where the first parameter indicates the second neural network to generate the first prompt corresponding to the first level. In the subsequent 2^{nd} training phase, the training device may input the training sample and a second parameter to the second neural network, to obtain a second prompt generated by the second neural network, where the second parameter indicates the second neural network to generate the second prompt corresponding to a second level. In the subsequent 3^{rd} training phase, the training device may input the training sample and a third parameter to the second neural network, to obtain a third prompt generated by the second neural network, where the third parameter indicates the second neural network to generate the third prompt corresponding to a third level. In the subsequent 4^{th} training phase, the training device may input the training sample and a fourth parameter to the second neural network, to obtain a fourth prompt generated by the second neural network, where the fourth parameter indicates the second neural network to generate the fourth prompt corresponding to a fourth level.

For example, all of the first parameter, the second parameter, the third parameter, and the fourth parameter are different from each other. For example, the first parameter may be 1111, the second parameter may be 2222, the third parameter may be 3333, and the fourth parameter may be 4444. For another example, the first parameter may be the first level, the second parameter may be the second level, the third parameter may be the third level, and the fourth parameter may be the fourth level. It should be noted that the examples herein are merely intended for ease of understanding a difference between the first parameter, the second parameter, the third parameter, and the fourth parameter, and are not intended to limit the solution.

It should be noted that, in another implementation, different neural networks may alternatively be used to generate prompts at different levels in different training phases of the deep learning model. In this case, only the training sample needs to be input to a neural network for generating a prompt, and no additional parameter (for example, the first parameter) needs to be input to the neural network for generating the prompt.

In this embodiment of this application, in the training phase of the deep learning model, the second neural network is used to generate a question that needs to be answered by the deep learning model, and a variety of questions may be generated. To answer the variety of questions, the deep learning model can fully understand various types of information. This helps improve a capability of the deep learning model to understand a traffic scene. In addition, the training sample including the information about the environment around the ego vehicle is input to the second neural network, to obtain a question output by the second neural network. To be specific, a traffic scene corresponding to the question generated by the second neural network and a traffic scene that needs to be understood by the deep learning model are a same traffic scene. Therefore, the question output by the second neural network can better adapt to the traffic scene that needs to be understood by the deep learning model, to help improve a capability of the deep learning model to understand the traffic scene.

In an implementation, a plurality of prompts corresponding to the first level may alternatively be pre-deployed on the training device. In this case, each time the training device obtains a first-level question, the training device may obtain, from the plurality of prompts corresponding to the first level, a first prompt corresponding to the first level.

702: The training device inputs the first-level question to the deep learning model, and obtains a first predicted answer corresponding to the first-level question.

In this embodiment of this application, after inputting the first-level question to the deep learning model, the training device may obtain third predicted information that is generated by the deep learning model and that corresponds to the first-level question; and obtain, based on the third predicted information generated by the deep learning model, the first predicted answer corresponding to the first-level question. For example, the third predicted information may indicate at least one candidate answer corresponding to the first-level question and a first probability value corresponding to each candidate answer.

For example, each candidate answer may be specifically represented in a token form. The candidate answer in the token form may also be understood as feature information of the candidate answer, and the candidate answer in the token form indicates one or more words.

Optionally, a start flag [CLS] bit may be inserted into a head of each candidate answer in the token form. In the candidate answer in the token form, the start flag [CLS] bit not only can identify a start of the candidate answer, but also can represent an overall meaning of the candidate answer. Feature information of each candidate answer further includes feature information of the [CLS] bit. Optionally, an end flag [SEP] bit may be further inserted into a tail of each candidate answer in the token form, and the feature information of each candidate answer further includes feature information of the [SEP] bit.

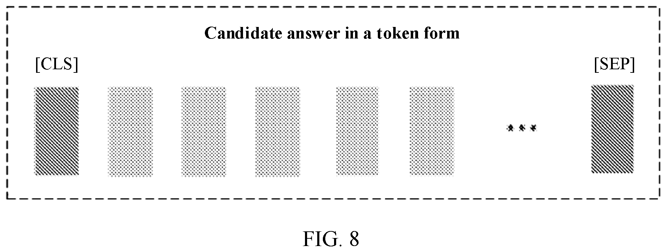

For more intuitive understanding of the solution, refer to FIG. 8. FIG. 8 is a diagram of a candidate answer according to an embodiment of this application. As shown in FIG. 8, a head of the candidate answer in a token form includes a start flag [CLS] bit, and a tail of the candidate answer in the token form includes an end flag [SEP] bit. It should be understood that the example in FIG. 8 is merely intended for ease of understanding the solution, and is not intended to limit the solution.

In an implementation, after obtaining the third predicted information, the training device may determine the at least one candidate answer indicated by the third predicted information and the first probability value corresponding to each candidate answer. In this case, the training device may determine the first predicted answer from the at least one candidate answer, where a first probability value corresponding to the first predicted answer is the largest one of a first probability value corresponding to the at least one candidate answer.

In another implementation, the first predicted answer is included in a first preset answer set corresponding to the first-level question, and the first predicted answer is obtained, based on the first preset answer set, from the at least one candidate answer indicated by the third predicted information.

For example, the first preset answer set may be deployed on the training device, and the first preset answer set includes one or more answers. After obtaining the third predicted information, the training device may determine an intersection set between the at least one candidate answer indicated by the third predicted information and the first preset answer set, where the intersection set includes at least one first candidate answer. The training device may determine the first predicted answer from the at least one first candidate answer based on a first probability value corresponding to each of the at least one first candidate answer, where a first probability value corresponding to the first predicted answer is the largest one of a first probability value corresponding to the at least one first candidate answer.

To further understand the concept of the "intersection set between the at least one candidate answer and the first preset answer set", for example, the first-level question is specifically represented as follows: Based on the given first feature information, in a frame -1, a speed of ( ) is 10 m/s. Content in ( ) is content that needs to be predicted by the deep learning model. The first preset answer set may include the ego vehicle, an obstacle x, a private vehicle, another vehicle, an electric vehicle, and a pedestrian. The obstacle x indicates an obstacle plus a reference numeral. For example, an obstacle 1, an obstacle 2, an obstacle 3, or an obstacle 4 meets a requirement of an obstacle plus a reference numeral, in other words, meets a requirement of the obstacle x. After obtaining the third predicted information output by the deep learning model, the training device determines the at least one candidate answer indicated by the third predicted information. For example, the at least one candidate answer may include the obstacle 1, a street lamp, the ego vehicle, a language textbook, and the obstacle 2. In this case, the intersection set between the at least one candidate answer and the first preset answer set may include the obstacle 1, the ego vehicle, and the obstacle 2. It should be understood that the example herein is merely intended for ease of understanding the solution, and is not intended to limit the solution.

In another implementation, the first predicted answer may be obtained by a classification network. The classification network is configured to determine, from at least one preset answer, the first predicted answer corresponding to second feature information. The first predicted answer may be one of the at least one preset answer. The second feature information may include feature information of a start flag [CLS] bit included in a second candidate answer in a token form (which may also be referred to as feature information of the second candidate answer). A first probability value corresponding to the second candidate answer is the largest one of a first probability value corresponding to the at least one candidate answer.

For example, a trained classification network may be deployed on the training device. After obtaining the third predicted information, the training device may determine the feature information of the second candidate answer from the third predicted information, obtain the second feature information from the feature information of the second candidate answer, and input the second feature information to the classification network, to obtain the first predicted answer generated by the classification network. The classification network is configured to determine, from M categories, a predicted category to which the second feature information belongs, where the M categories may be the at least one preset answer.

For example, the "classification network" may also be referred to as a "classifier". The classification network may be specifically represented as a recurrent neural network, a fully connected neural network, a convolutional neural network, or another type of neural network. This is not limited in this embodiment of this application.

703: The training device trains the deep learning model based on a first loss function, where in the 1^{st} training phase, the first loss function indicates a similarity between the first predicted answer and a first expected answer that correspond to the first-level question.

In this embodiment of this application, for example, in the 1^{st} training phase, the training device may obtain the first expected answer corresponding to the first-level question. The "first expected answer corresponding to the first-level question" may also be referred to as a "first ground truth corresponding to the first-level question", "first annotation information corresponding to the first-level question", a "first label corresponding to the first-level question", or another name with an equivalent meaning. The training device may generate a function value of the first loss function based on the first predicted answer and the first expected answer, where an objective of performing training by using the first loss function includes increasing the similarity between the first predicted answer and the first expected answer that correspond to the first-level question. The training device updates a weight parameter of the deep learning model based on the function value of the first loss function by using a back propagation algorithm, to implement one round of training of the deep learning model.

Optionally, step 703 may include: The training device trains the deep learning model and the first neural network based on the first loss function and a second loss function, where the second loss function indicates a similarity between the second predicted information and second expected information that correspond to the training sample, and an objective of performing training by using the second loss function includes increasing the similarity between the second predicted information and the second expected information that correspond to the training sample.

For example, content specifically carried in the second expected information is related to a type of a task performed by the first neural network.

For example, the training device may generate the function value of the first loss function based on the first predicted answer and the first expected answer; generate a function value of the second loss function based on the second predicted information and the second expected information that correspond to the training sample; determine a total loss function value based on the function value of the first loss function and the function value of the second loss function; and update weight parameters of the deep learning model and the first neural network based on the total loss function value by using the back propagation algorithm, to implement one round of training of the deep learning model and the first neural network.

The training device may repeatedly perform steps 701 to 703 a plurality of times until a first convergence condition is met, to train the deep learning model a plurality of times in the 1^{st} training phase. The first convergence condition may be: Steps 701 to 703 reach a first quantity of times. Alternatively, the first convergence condition may be: A convergence condition of the first loss function (optionally, further including the second loss function) is met.

It should be noted that steps 701 to 703 are optional steps. If steps 701 to 703 are not performed, step 704 may be directly performed.

704: In the 2^{nd} training phase, the training device obtains a second-level question corresponding to the traffic scene.

In this embodiment of this application, for example, the "second-level question" includes at least initial feature information of the second prompt, and the "second-level question" may further include the first feature information. For a meaning of the "first feature information", refer to the descriptions in the embodiment corresponding to FIG. 3. Details are not described herein again. For example, the second prompt may include at least one mask (MASK), and content of the mask is predicted by the deep learning model. That is, the content of the mask in the second prompt is supplemented by the deep learning model.

In the 2^{nd} training phase, the deep learning model is enabled to learn semantics of directional behavior of the ego vehicle or an obstacle, semantics of action behavior of the ego vehicle or an obstacle, or a relative spatial relationship between different objects. Therefore, the content of the mask that is predicted by the deep learning model may include at least one of the following: directional behavior, action behavior, or a relative spatial relationship between different objects. Optionally, in the 2^{nd} training phase, the content of the mask that is predicted by the deep learning model may alternatively include a data frame, a reference numeral of the ego vehicle or an obstacle, or other content.

For example, the "second prompt" may be specifically represented as follows: "In a frame 0, the ego vehicle performs ( ) in a lateral direction". A part in "( )" is the mask, to be specific, a part that needs to be predicted by the deep learning model. In the foregoing example, action behavior is predicted by the deep learning model. For example, content in "( )" may be changing a lane to the left. For another example, the "second prompt" may be specifically represented as follows: "In a frame 0, the ego vehicle performs (changing a lane to the left) in ( )". In the foregoing example, directional behavior is predicted by the deep learning model. For example, content in "( )" may be a lateral direction. It should be noted that the examples herein are merely intended for ease of understanding a concept of the "second prompt", and are not intended to limit the solution.

A specific implementation of step 704 is similar to the specific implementation of step 701. A difference lies in that the "first prompt" in step 701 is replaced with the "second prompt" in step 704, and the "first-level question" in step 701 is replaced with the "second-level question" in step 704. The specific implementation of step 704 is not described in detail herein again.

705: The training device inputs the second-level question to the deep learning model, and obtains a second predicted answer corresponding to the second-level question.

706: The training device trains the deep learning model based on the first loss function, where in the 2^{nd} training phase, the first loss function indicates a similarity between the second predicted answer and a second expected answer that correspond to the second-level question.

In this embodiment of this application, for meanings of terms in steps 705 and 706 and specific implementations of the steps, refer to the descriptions in steps 702 and 703. A difference lies in that the "first-level question" in steps 702 and 703 is replaced with the "second-level question", the "first predicted answer" in steps 702 and 703 is replaced with the "second predicted answer", and the "first expected answer" in steps 702 and 703 is replaced with the "second expected answer". The specific implementations of steps 705 and 706 are not described in detail herein again.

It should be noted that steps 704 to 706 are optional steps, and if steps 704 to 706 are not performed, step 707 may be directly performed after step 703 is performed; or if none of steps 701 to 706 is performed, step 707 may be directly performed; or if all of steps 701 to 707 are performed, the training device may alternately perform steps 701 to 703 while performing steps 704 to 706 a plurality of times.

707: In the 3^{rd} training phase, the training device obtains a third-level question corresponding to the traffic scene.

In this embodiment of this application, for example, the "third-level question" includes at least initial feature information of the third prompt, and the "third-level question" may further include the first feature information. For a meaning of the "first feature information", refer to the descriptions in the embodiment corresponding to FIG. 3. Details are not described herein again. For example, the third prompt may include at least one mask (MASK), and content of the mask is predicted by the deep learning model. That is, the content of the mask in the third prompt is supplemented by the deep learning model.

In the 3^{rd} training phase, the deep learning model is enabled to learn semantics of interactive behavior between different objects. In this case, the content of the mask that is predicted by the deep learning model may include interactive behavior. Optionally, in the 3^{rd} training phase, the content of the mask that is predicted by the deep learning model may alternatively include directional behavior and/or action behavior.

For example, the "third prompt" may be specifically represented as follows: "Interactive gaming behavior occurs between the ego vehicle and a private vehicle 3, and a category is ( )". A part in "( )" is the mask, to be specific, a part that needs to be predicted by the deep learning model. In the foregoing example, interactive behavior is predicted by the deep learning model. For example, content in "( )" may be overtaking. It should be noted that the examples herein are merely intended for ease of understanding a concept of the "third prompt", and are not intended to limit the solution.

A specific implementation of step 707 is similar to the specific implementation of step 701. A difference lies in that the "first prompt" in step 701 is replaced with the "third prompt" in step 707, and the "first-level question" in step 701 is replaced with the "third-level question" in step 707. The specific implementation of step 707 is not described in detail herein again.

708: The training device inputs the third-level question to the deep learning model, and obtains a third predicted answer corresponding to the third-level question.

709: The training device trains the deep learning model based on the first loss function, where in the 3^{rd} training phase, the first loss function indicates a similarity between the third predicted answer and a third expected answer that correspond to the third-level question.

In this embodiment of this application, for meanings of terms in steps 708 and 709 and specific implementations of the steps, refer to the descriptions in steps 702 and 703. A difference lies in that the "first-level question" in steps 702 and 703 is replaced with the "third-level question", the "first predicted answer" in steps 702 and 703 is replaced with the "third predicted answer", and the "first expected answer" in steps 702 and 703 is replaced with the "third expected answer". The specific implementations of steps 708 and 709 are not described in detail herein again.

It should be noted that steps 707 to 709 are optional steps, and if steps 707 to 709 are not performed, step 710 may be directly performed after step 707 is performed; or if none of steps 701 to 709 is performed, step 710 may be directly performed; or if all of steps 701 to 709 are performed, the training device may alternately perform steps 701 to 703 and/or steps 704 to 706 while performing steps 707 to 709 a plurality of times.

710: In the 4^{th} training phase, the training device obtains a fourth-level question corresponding to the traffic scene.

In this embodiment of this application, for example, the "fourth-level question" includes at least initial feature information of the fourth prompt, and the "fourth-level question" may further include the first feature information. For a meaning of the "first feature information", refer to the descriptions in the embodiment corresponding to FIG. 3. Details are not described herein again. For example, the fourth prompt may include at least one mask (MASK), and content of the mask is predicted by the deep learning model. That is, the content of the mask in the fourth prompt is supplemented by the deep learning model.

In the 4^{th} training phase, the deep learning model is enabled to learn cause-and-effect and a logical relationship of interactive behavior between different objects. In this case, the content of the mask that is predicted by the deep learning model may include a cause of interactive behavior. Optionally, in the 4^{th} training phase, the content of the mask that is predicted by the deep learning model may alternatively include interactive behavior.

For example, the "fourth prompt" may be specifically represented as follows: "Interactive gaming behavior occurs between a private vehicle 1 and a private vehicle 3, a category is yielding, and a cause is that ( )". A part in "( )" is the mask, to be specific, a part that needs to be predicted by the deep learning model. In the foregoing example, the cause of the interactive behavior of yielding is predicted by the deep learning model. It should be noted that the examples herein are merely intended for ease of understanding a concept of the "fourth prompt", and are not intended to limit the solution.

A specific implementation of step 710 is similar to the specific implementation of step 701. A difference lies in that the "first prompt" in step 701 is replaced with the "fourth prompt" in step 710, and the "first-level question" in step 701 is replaced with the "fourth-level question" in step 710. The specific implementation of step 710 is not described in detail herein again.

711: The training device inputs the fourth-level question to the deep learning model, and obtains a fourth predicted answer corresponding to the fourth-level question.

712: The training device trains the deep learning model based on the first loss function, where in the 4^{th} training phase, the first loss function indicates a similarity between the fourth predicted answer and a fourth expected answer that correspond to the fourth-level question.

In this embodiment of this application, for meanings of terms in steps 711 and 712 and specific implementations of the steps, refer to the descriptions in steps 702 and 703. A difference lies in that the "first-level question" in steps 702 and 703 is replaced with the "fourth-level question", the "first predicted answer" in steps 702 and 703 is replaced with the "fourth predicted answer", and the "first expected answer" in steps 702 and 703 is replaced with the "fourth expected answer". The specific implementations of steps 711 and 712 are not described in detail herein again.

It should be noted that steps 710 to 712 are optional steps, and if steps 710 to 712 are not performed, retraining of the deep learning model may be directly stopped after step 710 is performed; or if all of steps 701 to 712 are performed, the training device may alternately perform steps 701 to 703 and/or steps 704 to 706 and/or steps 707 to 709 while performing steps 710 to 712 a plurality of times.

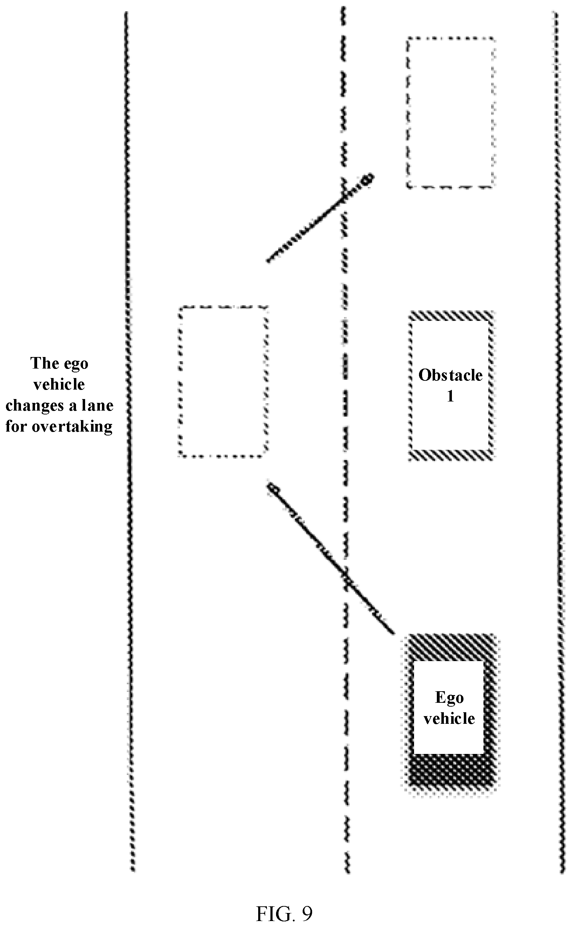

For more intuitive understanding of the "first prompt", the "second prompt", the "third prompt", and the "fourth prompt", a traffic scene is used below as an example for description. FIG. 9 is a diagram of a traffic scene according to an embodiment of this application. FIG. 9 shows a traffic scene in which "an ego vehicle changes a lane for overtaking". For example, in the traffic scene, the first prompt used in the 1^{st} training phase may include: In a frame (0), (a travel speed) of (the ego vehicle) is (15 m/s). For another example, the first prompt may include: In a frame (-2), (an x coordinate location) of (an obstacle 1) is (16.8 m). It should be noted that content in "( )" may be set to content of [mask], and the content of [mask] is content that needs to be predicted by the deep learning model. In each of the foregoing examples of the first prompt, there are a plurality of "( )". In each actual training process, content in one of the plurality of "( )" may be set to [mask].

For example, the second prompt used in the 2^{nd} training phase may include: In a frame (-10) to a frame (0), (the ego vehicle) performs (changing a lane to the left) in (lateral behavior). For another example, in a frame (-10) to a frame (0), (the ego vehicle) performs (slight acceleration) in (longitudinal behavior). Content of one of a plurality of "( )" included in each of the foregoing second prompts may be set to [mask], and content of [mask] is predicted by the deep learning model. It can be learned from the foregoing examples that, in the 2^{nd} training phase, the machine learning model is enabled to learn behavior of an object and a relationship between different objects.

For example, the third prompt used in the 3^{rd} training phase may include: In a frame (-9) to a frame (-2), interactive gaming behavior occurs between (the ego vehicle) and (a private vehicle 1), and a category is (changing a lane for overtaking), which is specifically manifested as that (the ego vehicle changes a lane to the left to overtake the private vehicle 1). Content in one of a plurality of "( )" included in each of the foregoing third prompt may be set to [mask], and content of [mask] is predicted by the deep learning model. It can be learned from the foregoing example that, in the 3^{rd} training phase, the machine learning model is enabled to learn interactive behavior between different objects.

For example, the fourth prompt used in the 4^{th} training phase may include: In the past 3s, the ego vehicle changed a lane for overtaking because (a private vehicle 1 in front of the ego vehicle traveled slowly, a lane on the left was idle, and to improve travel efficiency, the ego vehicle changed a lane for overtaking). Content in "( )" may be set to [mask]. It can be learned from the foregoing example that, in the 4^{th} training phase, the machine learning model is enabled to learn a cause-and-effect relationship of interactive behavior. It should be understood that the example in FIG. 9 is merely intended for ease of understanding the solution, and is not intended to limit the solution.

In this embodiment of this application, a training process of the deep learning model may include at least two training phases. The at least two training phases may include at least two of the 1^{st} training phase, the 2^{nd} training phase, the 3^{rd} training phase, and the 4^{th} training phase. Specific training phases used for the deep learning model may be flexibly determined based on an actual application scenario. This is not limited in this embodiment of this application. For example, a "first training phase" in this application may be any one of the 1^{st} training phase, the 2^{nd} training phase, the 3^{rd} training phase, and the 4^{th} training phase, and a "second training phase" and the "first training phase" in this application are different training phases.

A third question represents a question used in the first training phase. After a training phase corresponding to the "first training phase" is determined, one of the first-level question, the second-level question, the third-level question, and the fourth-level question that is represented by the third question may be determined. For example, if the first training phase is the 1^{st} training phase, the third question represents the first-level question. For another example, if the first training phase is the 2^{nd} training phase, the third question represents the second-level question. For another example, if the first training phase is the 3^{rd} training phase, the third question represents the third-level question. For another example, if the first training phase is the 4^{th} training phase, the third question represents the fourth-level question.

Correspondingly, a fourth question represents a question used in the second training phase. After a training phase corresponding to the "second training phase" is determined, one of the first-level question, the second-level question, the third-level question, and the fourth-level question that is represented by the fourth question may be determined.

For example, the at least two training phases may include the 1^{st} training phase and the 2^{nd} training phase; or the at least two training phases may include the 2^{nd} training phase and the 3^{rd} training phase; or the at least two training phases may include the 3^{rd} training phase and the 4^{th} training phase; or the at least two training phases may include the 1^{st} training phase, the 2^{nd} training phase, and the 3^{rd} training phase; or the at least two training phases may include the 1^{st} training phase, the 2^{nd} training phase, and the 4^{th} training phase; or the at least two training phases may include the 2^{nd} training phase, the 3^{rd} training phase, and the 4^{th} training phase; or the at least two training phases may include the 1^{st} training phase, the 2^{nd} training phase, the 3^{rd} training phase, and the 4^{th} training phase. Specific training phases used in the training process of the deep learning model may be flexibly determined based on an actual application scenario. This is not limited in this embodiment of this application.

In this embodiment of this application, the deep learning model is trained in the at least two training phases, the third question and the fourth question are respectively used in the at least two training phases, and the third question and the fourth question are used to obtain information at different levels from the traffic scene. That is, a progressive training mode is used during training of the deep learning model. This helps the deep learning model learn logical thinking of stepwise inference, to improve human-like nature of the deep learning model, and also helps a trained deep learning model more properly perform an autonomous driving-related task.

### 2. Application phase

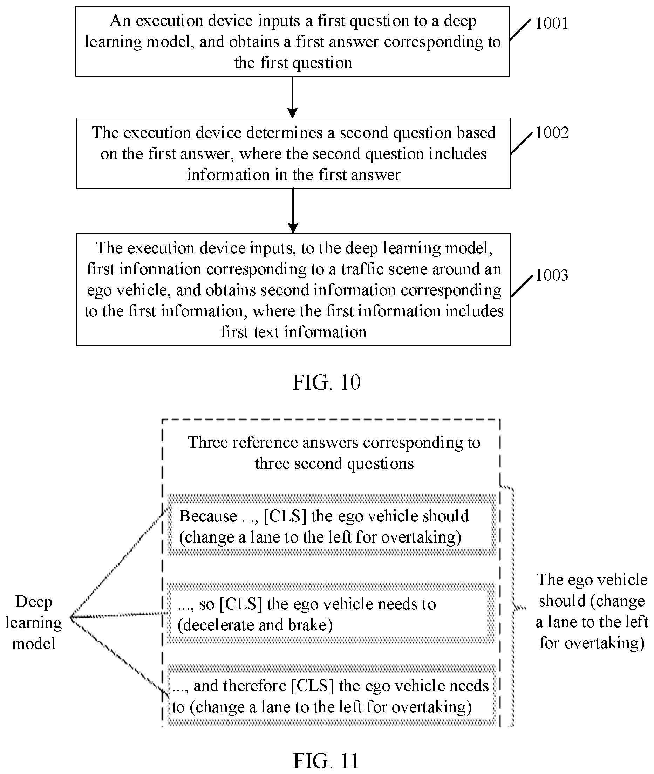

In embodiments of this application, specifically, FIG. 10 is another schematic flowchart of an information processing method according to an embodiment of this application. The information processing method provided in this application may include the following steps.

1001: An execution device inputs a first question to a deep learning model, and obtains a first answer corresponding to the first question.

In this embodiment of this application, step 1001 is an optional step. For example, first information in this application may be represented as the first question, and second information in this application may be a second answer corresponding to a second question. Optionally, before inputting the first information to the deep learning model, a training device may further input the first question to the deep learning model, to obtain the first answer corresponding to the first question.

For example, the first question may include a prompt. Optionally, the first question may further include first feature information. The first feature information includes feature information of information about an environment around an ego vehicle. For a meaning of the "first feature information" and detailed descriptions of "generating the first feature information by a vehicle", refer to the descriptions in the embodiment corresponding to FIG. 3. Details are not described herein again.

The first question and the second question may correspond to a same traffic scene (subsequently referred to as a "target traffic scene" for ease of description). Optionally, the first question and the second question may be used to obtain information at different levels from the target traffic scene. For a concept of the "different levels", refer to the descriptions in the embodiment corresponding to FIG. 7A and FIG. 7B. For example, the first question is used to obtain basic attribute information and semantic information in the target traffic scene. For meanings of the "basic attribute information and semantic information", refer to the descriptions in the embodiment corresponding to FIG. 7A and FIG. 7B. For another example, the first question is used to obtain behavior of an object and a relationship between different objects in the target traffic scene. A specific question that the "first question" is manifested as may be determined based on an actual application scenario, and is not limited herein.

For example, the execution device is a device on which a machine learning model that has undergone a training operation is deployed. In a case, the execution device may be specifically represented as a vehicle. To be specific, a trained deep learning model is deployed on the vehicle. In another case, the execution device may be a device other than a vehicle. In this case, the vehicle may send the first question to the execution device, and the execution device inputs the first question to the deep learning model. In another case, the execution device may be a device other than the vehicle, and after the vehicle sends the first information to the execution device, the execution device may alternatively generate the first question, and input the first question to the deep learning model. For example, after inputting the first question to the deep learning model, the execution device may obtain predicted information generated by the deep learning model, and determine, based on the predicted information generated by the deep learning model, the first answer corresponding to the first question.

1002: The execution device determines the second question based on the first answer, where the second question includes information in the first answer.

In this embodiment of this application, step 1002 is an optional step. After determining the first answer corresponding to the first question, the execution device may generate the second question based on the first answer. For example, after determining the first answer, the execution device may update, based on the first answer, a second question generated by the vehicle (which may also be understood as a "pre-update second question"), to obtain an updated second question. The "updated second question" may also be understood as the "first information".

For example, the execution device may perform feature extraction on all or a part of information included in the first answer, to obtain initial feature information of all or a part of the information included in the first answer, and then add the initial feature information to a prompt in the pre-update second question, to obtain the updated second question.

For example, the second answer corresponding to the second question may correspond to any one of the following tasks: identifying a risky obstacle around the ego vehicle, identifying behavior of an object around the ego vehicle, predicting behavior of an object around the ego vehicle, predicting a trajectory of an object around the ego vehicle, making a decision on behavior of the ego vehicle, planning a trajectory for the ego vehicle, or controlling the ego vehicle. That is, the second question is used to obtain information corresponding to the foregoing tasks. In this case, the second question may correspond to any one of the foregoing plurality of tasks.

For example, the second answer corresponds to the task of "identifying behavior of an object around the ego vehicle". Semantics of the prompt in the pre-update second question generated by the vehicle may include: In a frame ( ) to a frame ( ), an obstacle in an interactive gaming relationship with the ego vehicle is ( ) and specific behavior of the obstacle is that ( ). Information carried in the first answer may include: In a frame -26 to a frame -5, an obstacle in an interactive gaming relationship with the ego vehicle is an obstacle 3. Semantics of a prompt in the updated second question may include: In a frame -26 to a frame -5, an obstacle in an interactive gaming relationship with the ego vehicle is an obstacle 3, and specific behavior of the obstacle is that ( ). Content of "( )" in the updated second question is content that needs to be predicted by the deep learning model.

For another example, the second answer corresponds to the task of "predicting behavior of an object around the ego vehicle". Semantics of the prompt in the pre-update second question generated by the vehicle may include: In a frame 0, a topology to which an obstacle 1 belongs is ( ). Based on a topological relationship of the obstacle 1 and behavior in a historical frame, navigation behavior to be performed by the obstacle 1 is ( ), because ( ). Information carried in the first answer may include: A topology to which an obstacle 1 belongs is a topology 1. Semantics of a prompt in the updated second question may include: In a frame 0, a topology to which an obstacle 1 belongs is a topology 1. Based on a topological relationship of the obstacle 1 and behavior in a historical frame, navigation behavior to be performed by the obstacle 1 is ( ), because ( ). Content of "( )" in the updated second question is content that needs to be predicted by the deep learning model.

For another example, the second answer corresponds to the task of "predicting behavior of an object around the ego vehicle". Semantics of the prompt in the pre-update second question generated by the vehicle may include: In a frame 0, ( ) has an interactive relationship with an obstacle 1. Based on a topological relationship between the obstacle 1 and ( ) and behavior in a historical frame, interactive behavior to be performed by the obstacle 1 is ( ). Information carried in the first answer may include: An obstacle 2 has an interactive relationship with an obstacle 1. Semantics of a prompt in the updated second question may include: In a frame 0, an obstacle 2 has an interactive relationship with an obstacle 1. Based on a topological relationship between the obstacle 1 and the obstacle 2 and behavior in a historical frame, interactive behavior to be performed by the obstacle 1 is ( ). Content of "( )" in the updated second question is content that needs to be predicted by the deep learning model.

For another example, the second answer corresponds to the task of "making a decision on behavior of the ego vehicle". Semantics of the prompt in the pre-update second question generated by the vehicle may include: In a frame 0, a topology to which the ego vehicle belongs is ( ), and an obstacle in an interactive relationship with the ego vehicle includes ( ). Based on a topological relationship between the ego vehicle and the obstacle ( ) in an interactive relationship with the ego vehicle and behavior in a historical frame, behavior to be performed by the ego vehicle is ( ), and a cause of the interactive behavior is that ( ). Information carried in the first answer may include: In a frame 0, a topology to which the ego vehicle belongs is a topology 2, and an obstacle in an interactive relationship with the ego vehicle includes an obstacle 4. Semantics of a prompt in the updated second question may include: In a frame 0, a topology to which the ego vehicle belongs is a topology 2, and an obstacle in an interactive relationship with the ego vehicle includes an obstacle 4. Based on a topological relationship between the ego vehicle and the obstacle (obstacle 4) in an interactive relationship with the ego vehicle and behavior in a historical frame, behavior to be performed by the ego vehicle is ( ), and a cause of the interactive behavior is that ( ). Content of "( )" in the updated second question is content that needs to be predicted by the deep learning model.

It should be noted that the foregoing examples of "first text in the first information (which may also be understood as the prompt in the second question)", the "information carried in the first answer", and the "updated second question" are merely intended for ease of understanding a relationship between "first text information", the "information in the first answer", and the "updated second question", and are not intended to limit the solution.

In this embodiment of this application, the first answer to the first question is first obtained, then the second question is generated based on the first answer, and then the answer to the second question is obtained, where the first question and the second question correspond to a same traffic scene. That is, questions are progressively put to the deep learning model. This helps reduce difficulty in answering the second question by the deep learning model, and also helps improve a capability of the deep learning model to process a question corresponding to a complex traffic scene. In addition, the manner of progressively asking questions further helps introduce logical thinking of stepwise inference into the deep learning model used in the autonomous driving field, to improve human-like nature of the finally obtained second answer.

1003: The execution device inputs, to the deep learning model, the first information corresponding to a traffic scene around the ego vehicle, and obtains the second information corresponding to the first information, where the first information includes the first text information.

In this embodiment of this application, because steps 1001 and 1002 are optional steps, if steps 1001 and 1002 are not performed, in step 1003, the first text information in the "first information" is generated by the vehicle; or if steps 1001 and 1002 are performed, in step 1003, the "first information" may be understood as the "updated second question", and the first text information in the first information is determined based on the pre-update second question generated by the vehicle and the first answer.

For example, if the first text information includes initial feature information of preset text corresponding to a first task performed by the deep learning model, the first text information may include the initial feature information of the preset text and the initial feature information of the information in the first answer. Alternatively, if the first text information includes initial feature information of text entered by a user, the first text information may include the initial feature information of the text entered by the user and the initial feature information of the information in the first answer.

In this embodiment of this application, two cases of information that may be included in the first text information are described, to improve implementation flexibility of the solution. When the first text information includes information about the preset text corresponding to the first task performed by the deep learning model, after the first task is determined, the first text information can be quickly determined, to improve efficiency of obtaining the second information. When the first text information includes information about the text entered by the user, question answering may be performed based on a question of the user. This helps improve user loyalty of the solution, and also better helps the user understand behavior of the vehicle during autonomous driving.

For example, step 1003 may include: The execution device inputs, to the deep learning model, the first information corresponding to the traffic scene around the ego vehicle, to obtain first predicted information generated by the deep learning model; and determines, based on the first predicted information, the second information corresponding to the first information. For a specific implementation of the foregoing step, refer to the descriptions in the embodiment corresponding to FIG. 3. Details are not described herein again. A specific representation form of the "first predicted information" is similar to the specific representation form of the "third predicted information" in the embodiment corresponding to FIG. 7A and FIG. 7B. Refer to the foregoing descriptions for understanding. Details are not described herein again.

For example, the first information is the second question (or the updated second question), and the second information is the second answer corresponding to the second question (the updated second question). The second answer corresponds to any one of the following tasks: identifying a risky obstacle around the ego vehicle, identifying behavior of an object around the ego vehicle, predicting behavior of an object around the ego vehicle, predicting a trajectory of an object around the ego vehicle, making a decision on behavior of the ego vehicle, planning a trajectory for the ego vehicle, controlling the ego vehicle, or another task during autonomous driving. This is not limited herein. In this embodiment of this application, a plurality of tasks performed by the deep learning model are provided, to improve implementation flexibility of the solution.

Specifically, in an implementation, the execution device inputs a second question to the deep learning model, to obtain first predicted information that is generated by the deep learning model and that corresponds to the second question, and then may determine, based on the first predicted information, a second answer corresponding to the second question.

Optionally, in a case, the second answer is included in a second preset answer set corresponding to the second question, and the second answer is obtained, based on the second preset answer set, from at least one candidate answer generated by the deep learning model. For example, the second preset answer set may be deployed on the execution device, and the second preset answer set includes one or more answers. After obtaining the first predicted information, the execution device may determine an intersection set between the at least one candidate answer indicated by the first predicted information and the second preset answer set, where the intersection set includes at least one first candidate answer. The execution device may determine the second answer from the at least one first candidate answer based on a first probability value corresponding to each of the at least one first candidate answer, where a first probability value corresponding to the second answer is the largest one of a first probability value corresponding to the at least one first candidate answer.

To further understand a concept of the "intersection set between the at least one candidate answer and the second preset answer set", for example, semantics of the second question is as follows: Based on the given first feature information, is a decision on a subsequent action of the ego vehicle in a lateral direction ( )? Content in ( ) is content that needs to be predicted by the deep learning model. The second preset answer set may include changing a lane to the left, bypassing (bypass) from the left, holding, bypassing (bypass) from the right, and changing a lane to the right. The at least one candidate answer indicated by the first predicted information may include acceleration, changing a lane to the left, take-off, holding, and changing a lane to the right. The intersection set between the at least one candidate answer and the second preset answer set may include changing a lane to the left, holding, and changing a lane to the right. It should be understood that the examples herein are merely intended for ease of understanding the solution, and are not intended to limit the solution.

In this embodiment of this application, the deep learning model sometimes gives an irrelevant answer or talks nonsense, to be specific, the at least one candidate answer determined by the deep learning model may include an answer irrelevant to a question. Therefore, to avoid occurrence of the foregoing problem, the second preset answer set corresponding to the second question may be deployed. At least one answer included in the second preset answer set corresponding to the second question is an answer related to the second question. The second answer corresponding to the second question is finally determined based on the second preset answer set and the at least one candidate answer determined based on the deep learning model. This helps avoid a problem that the finally obtained second answer is irrelevant to the second question, to improve accuracy of the second answer obtained by the deep learning model.

Optionally, in another case, the second answer is obtained by a classification network that has undergone a training operation, and second feature information includes feature information of a start flag [CLS] bit in feature information of a candidate answer. The classification network is configured to determine, from at least one preset answer, the second answer corresponding to the second feature information. The classification network is configured to determine, from M categories, a predicted category to which the second feature information belongs, where the M categories may be the at least one preset answer. That is, the classification network is configured to determine, from the at least one answer, a second answer to which the second feature information belongs. For example, a trained classification network may be deployed on the execution device. After obtaining the first predicted information that is generated by the deep learning model and that corresponds to the second question, the execution device may determine feature information of a second candidate answer from the first predicted information, where a first probability value of the second candidate answer is the largest one of a first probability value of at least one candidate answer indicated by the first predicted information. The execution device may obtain the second feature information from the feature information of the second candidate answer, and input the second feature information to the classification network, to obtain the second answer generated by the classification network.

In this embodiment of this application, because the feature information of the start flag [CLS] bit (that is, the second feature information) can represent an overall meaning of a candidate answer, using the feature information of the start flag [CLS] bit to represent feature information of the candidate answer is appropriate. The classification network is configured to determine, from the at least one preset answer, a second answer to which the second feature information belongs. In this case, the second answer is limited to the at least one preset answer. This helps avoid a problem that the finally obtained second answer is irrelevant to the second question, to improve accuracy of the second answer obtained by the deep learning model.

In another case, after obtaining the first predicted information corresponding to the second question, to be specific, after obtaining at least one candidate answer indicated by the first predicted information and a first probability value corresponding to each candidate answer, the execution device may alternatively obtain the second answer from the at least one candidate answer, where a first probability value corresponding to the second answer is the largest one of a first probability value corresponding to the at least one candidate answer indicated by the first predicted information.

In another implementation, that the execution device inputs, to the deep learning model, the first information corresponding to the traffic scene around the ego vehicle includes: The execution device inputs a plurality of second questions to the deep learning model. For example, the plurality of second questions correspond to a same task, in other words, semantics of the plurality of second questions are similar, and different second questions of the plurality of second questions carry different prompts. That the execution device obtains the second information corresponding to the first information includes: The execution device obtains a plurality of reference answers that are in a one-to-one correspondence with the plurality of second questions, to be specific, the execution device may obtain one reference answer corresponding to each second question, where all of the plurality of reference answers are obtained by the deep learning model. Then the execution device or a first device may determine the second answer based on the plurality of reference answers. For a relationship between the "first device" and the "execution device", refer to the descriptions in the embodiment corresponding to FIG. 3. Details are not described herein again.

A process of "determining the second answer based on the plurality of reference answers" may include: determining the second answer based on the plurality of reference answers according to a majority voting policy. To be specific, the finally determined second answer is included in the plurality of reference answers. For more intuitive understanding of the solution, refer to FIG. 11. FIG. 11 is a diagram of a plurality of second questions according to an embodiment of this application. FIG. 11 shows an example in which the first task performed by the deep learning model is "making a decision on the ego vehicle". FIG. 11 shows three second questions. Prompts in the three second questions are as follows: "Because ..., [CLS] the ego vehicle should ( )", "..., so [CLS] the ego vehicle needs to ( )", and "..., and therefore [CLS] the ego vehicle needs to ( )". It can be learned from the foregoing descriptions that different second questions of the three second questions include different prompts. Reference answers corresponding to the three second questions are as follows: "change a lane to the left for overtaking", "decelerate and brake", and "change a lane to the left for overtaking". According to the majority voting policy, a final second answer is "change a lane to the left for overtaking". It should be understood that the example in FIG. 11 is merely intended for ease of understanding the solution, and is not intended to limit the solution.

For example, after inputting each of the plurality of second questions to the deep learning model, the execution device may obtain a plurality of pieces of first predicted information that are generated by the deep learning model and that are in a one-to-one correspondence with the plurality of second questions. One reference answer can be determined based on each piece of first predicted information. It should be noted that, for a process of "determining one reference answer based on each piece of first predicted information", reference may be made to the foregoing process of "determining the second answer based on the first predicted information", and a difference lies in that the "second answer" is replaced with the "candidate answer".

That is, in this implementation, in a case, the reference answer (namely, the second answer) is included in the second preset answer set corresponding to the second question, and the reference answer is obtained, based on the second preset answer set, from the at least one candidate answer generated by the deep learning model. In another case, the reference answer (namely, the second answer) is obtained by the classification network that has undergone the training operation, the second feature information includes the feature information of the start flag [CLS] bit in the feature information of the candidate answer, and the classification network is configured to determine, from the at least one preset answer, the reference answer corresponding to the second feature information. In another case, the reference answer (namely, the second answer) is directly obtained from the at least one candidate answer indicated by the first predicted information.

In this embodiment of this application, the plurality of second questions are input to the deep learning model, different second questions of the plurality of second questions carry different prompts, the plurality of reference answers are obtained based on the plurality of different prompts, and then the final second answer can be obtained from the plurality of reference answers. This improves rigor in obtaining the final second answer, and helps improve accuracy of the finally obtained second question.

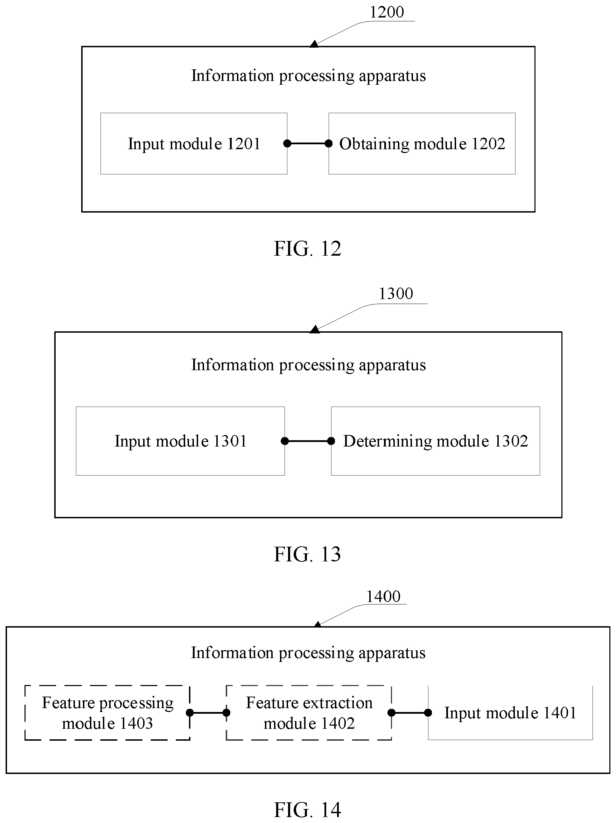

Based on the embodiments corresponding to FIG. 1 to FIG. 11, to better implement the foregoing solutions in embodiments of this application, the following further provides related devices for implementing the foregoing solutions. Specifically, FIG. 12 is a diagram of a structure of an information processing apparatus according to an embodiment of this application. The information processing apparatus 1200 includes: an input module 1201, configured to input, to a deep learning model, first information corresponding to a traffic scene around an ego vehicle, where the first information includes first text information; and an obtaining module 1202, configured to obtain second information corresponding to the first information, where the second information is obtained based on the deep learning model, and the second information corresponds to any one of the following tasks: making a decision on behavior of the ego vehicle, planning a trajectory for the ego vehicle, or controlling the ego vehicle.

Optionally, the first text information includes information about preset text corresponding to the task, or the first text information includes information about text entered by a user.

Optionally, the input module 1201 is further configured to input, to the deep learning model, a first question corresponding to the traffic scene, where the first question is used to obtain a first answer corresponding to the first question, the first answer is obtained by the deep learning model, the first information is a second question, the second information is a second answer corresponding to the second question, and the first text information includes information in the first answer.

Optionally, the first information further includes first feature information, the first feature information includes feature information of information about an environment around the ego vehicle, and the information about the environment includes physical attribute information of an object around the ego vehicle.

Optionally, the first feature information is obtained based on a feature extraction network, the feature extraction network belongs to a first neural network, and the first neural network is configured to perform at least two of the following tasks: predicting a trajectory of an object around the ego vehicle, making a decision on behavior of the ego vehicle, planning a trajectory for the ego vehicle, predicting a speed range of the ego vehicle, or controlling the ego vehicle.

Optionally, the first information is a second question, the second information is a second answer corresponding to the second question, the second answer is included in a preset answer set corresponding to the second question, and the second answer is obtained, based on the preset answer set, from at least one candidate answer generated by the deep learning model.

Optionally, the first information is a second question, the second information is a second answer corresponding to the second question, the second answer is obtained by a classification network, second feature information includes feature information of a start flag [CLS] bit in feature information of the second answer, and the classification network is configured to determine, from at least one preset answer, the second answer corresponding to the second feature information.

Optionally, the first information is a second question, and the second information is a second answer corresponding to the second question. The input module 1201 is specifically configured to input a plurality of second questions to the deep learning model, where different second questions of the plurality of second questions carry different prompts. The obtaining module 1202 is specifically configured to obtain a plurality of reference answers that are in a one-to-one correspondence with the plurality of second questions, and determine the second answer based on the plurality of reference answers, where all of the plurality of reference answers are obtained by the deep learning model.

It should be noted that content such as information exchange and an execution process between the modules/units in the information processing apparatus 1200 is based on a same concept as that of the method embodiments corresponding to FIG. 3 to FIG. 11 in this application. For specific content, refer to the descriptions in the method embodiments of this application. Details are not described herein again.

Further, FIG. 13 is a diagram of another structure of an information processing apparatus according to an embodiment of this application. The information processing apparatus 1300 includes: an input module 1301, configured to input a first question to a deep learning model, and obtain a first answer corresponding to the first question; and a determining module 1302, configured to determine a second question based on the first answer, where the second question carries information in the first answer. The input module 1301 is further configured to input the second question to the deep learning model, and obtain a second answer corresponding to the second question, where the first question and the second question correspond to a same traffic scene.

Optionally, the second answer corresponds to any one of the following tasks: identifying a risky obstacle around an ego vehicle, identifying behavior of an object around an ego vehicle, predicting behavior of an object around an ego vehicle, predicting a trajectory of an object around an ego vehicle, making a decision on behavior of an ego vehicle, planning a trajectory for an ego vehicle, or controlling an ego vehicle.

It should be noted that content such as information exchange and an execution process between the modules/units in the information processing apparatus 1300 is based on a same concept as that of the method embodiments corresponding to FIG. 3 to FIG. 11 in this application. For specific content, refer to the descriptions in the method embodiments of this application. Details are not described herein again.

Further, FIG. 14 is a diagram of another structure of an information processing apparatus according to an embodiment of this application. The information processing apparatus 1400 is configured to train a deep learning model. The deep learning model includes at least two training phases. The at least two training phases include a first training phase and a second training phase. The information processing apparatus 1400 includes: an input module 1401, configured to: in the first training phase, input a third question to the deep learning model, and obtain a predicted answer corresponding to the third question. The input module 1401 is further configured to: in the second training phase, input a fourth question to the deep learning model, and obtain a predicted answer corresponding to the fourth question. A first loss function is used to train the deep learning model. In the first training phase, the first loss function indicates a similarity between the predicted answer and an expected answer that correspond to the third question. In the second training phase, the first loss function indicates a similarity between the predicted answer and an expected answer that correspond to the fourth question. Both the third question and the fourth question are related to a traffic scene. The third question and the fourth question are used to obtain information at different levels.

Optionally, the third question includes first feature information, the first feature information includes feature information of information about an environment around an ego vehicle, and the information about the environment includes physical attribute information of an object around the ego vehicle.

Optionally, the information processing apparatus 1400 further includes: a feature extraction module 1402, configured to input the information about the environment to a feature extraction network, to obtain second feature information generated by the feature extraction network, where the second feature information is used to obtain the first feature information; and a feature processing module 1403, configured to input the first feature information to a feature processing network, to obtain predicted information generated by the feature processing network, where the feature extraction network and the feature processing network belong to a same neural network, and the neural network is configured to perform at least the following plurality of tasks: predicting a trajectory of an object around the ego vehicle, making a decision on behavior of the ego vehicle, planning a trajectory for the ego vehicle, predicting a speed range of the ego vehicle, or controlling the ego vehicle. A training phase of the deep learning model includes training the deep learning model and the neural network by using the first loss function and a second loss function. The second loss function indicates a similarity between the predicted information and second expected information that correspond to the information about the environment.

It should be noted that content such as information exchange and an execution process between the modules/units in the information processing apparatus 1400 is based on a same concept as that of the method embodiments corresponding to FIG. 3 to FIG. 11 in this application. For specific content, refer to the descriptions in the method embodiments of this application. Details are not described herein again.

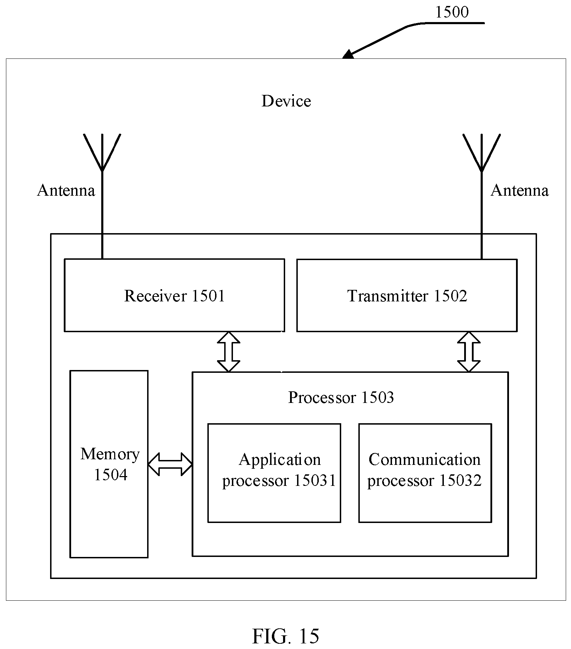

The following describes a device provided in embodiments of this application. FIG. 15 is a diagram of a structure of a device according to an embodiment of this application. Specifically, the device 1500 includes a receiver 1501, a transmitter 1502, a processor 1503, and a memory 1504 (there may be one or more processors 1503 in the device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data for the processor 1503. A part of the memory 1504 may further include a non-volatile random access memory (non-volatile random access memory, NVRAM). The memory 1504 stores processor and operation instructions, an executable module, or a data structure, or a subset thereof, or an extended set thereof. The operation instructions may include various operation instructions for implementing various operations.

The processor 1503 controls an operation of the device. During specific application, the components of the device are coupled together through a bus system. In addition to a data bus, the bus system may further include a power bus, a control bus, a status signal bus, and the like. However, for clarity of description, various buses are marked as the bus system in the figure.

The methods disclosed in the foregoing embodiments of this application may be applied to the processor 1503 or implemented by the processor 1503. The processor 1503 may be an integrated circuit chip and has a signal processing capability. During implementation, the steps of the foregoing methods may be performed by a hardware integrated logic circuit in the processor 1503 or by using instructions in a form of software. The processor 1503 may be a general-purpose processor, a digital signal processor (digital signal processor, DSP), a microprocessor, or a microcontroller. The processor 1503 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 1503 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1504, and the processor 1503 reads information in the memory 1504 and performs the steps of the foregoing methods in combination with hardware of the processor 1503.

The receiver 1501 may be configured to receive input digit or character information, and generate a signal input related to a related setting and function control of the device. The transmitter 1502 may be configured to output digit or character information through a first interface. The transmitter 1502 may be further configured to send instructions to a disk group through the first interface, to modify data in the disk group. The transmitter 1502 may further include a display device, for example, a display.

In this embodiment of this application, in a case, the processor 1503 is configured to perform the methods performed by the first device and the execution device in the embodiments corresponding to FIG. 3 to FIG. 11; and in another case, the processor 1503 is configured to perform the methods performed by the training device in the embodiments corresponding to FIG. 3 to FIG. 11. It should be noted that a specific manner of performing the foregoing steps by the application processor 15031 in the processor 1503 is based on a same concept as that of the method embodiments corresponding to FIG. 3 to FIG. 11 in this application, and technical effects of this embodiment of this application are the same as those of the method embodiments corresponding to FIG. 3 to FIG. 11 in this application. For specific content, refer to the descriptions in the method embodiments in this application. Details are not described herein again.

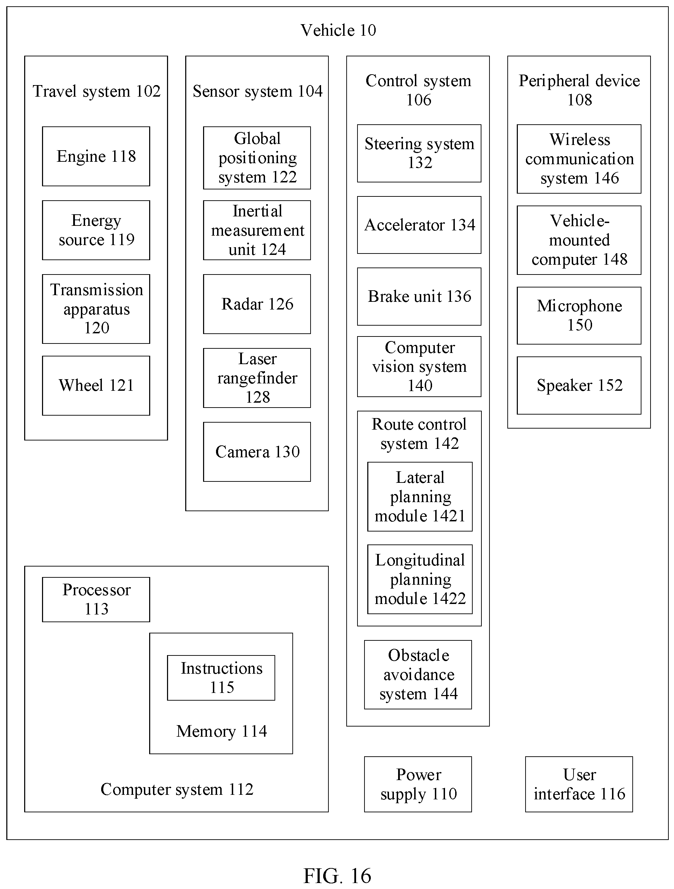

An embodiment of this application further provides a vehicle. FIG. 16 is a diagram of a structure of a vehicle according to an embodiment of this application. The vehicle 100 is configured to be in a fully or partially autonomous driving mode. For example, the vehicle 100 may control the vehicle 100 in the autonomous driving mode, determine current statuses of the vehicle and a surrounding environment of the vehicle based on a manual operation, determine possible behavior of at least one another vehicle in the surrounding environment, determine a confidence level corresponding to a possibility of performing the possible behavior by the another vehicle, and control the vehicle 100 based on determined information. When the vehicle 100 is in the autonomous driving mode, the vehicle 100 may alternatively be configured to operate without interacting with a person.

The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of components. In addition, the subsystems and the components of the vehicle 100 may be connected to each other in a wired or wireless manner.

The travel system 102 may include a component that provides power for the vehicle 100 to move. In an embodiment, the travel system 102 may include an engine 118, an energy source 119, a transmission apparatus 120, and a wheel/tire 121.

The engine 118 may be an internal combustion engine, an electric motor, an air compression engine, or another type of combination of engines, for example, a hybrid engine including a gasoline engine and an electric motor, or a hybrid engine including an internal combustion engine and an air compression engine. The engine 118 converts the energy source 119 into mechanical energy. Examples of the energy source 119 include gasoline, diesel, other petroleum-based fuels, propane, other compressed gas-based fuels, anhydrous alcohol, a PV module, a battery, and other power sources. The energy source 119 may also provide energy for another system of the vehicle 100. The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more wheels 121.

The sensor system 104 may include several sensors for sensing information about a surrounding environment of the vehicle 100. For example, the sensor system 104 may include a positioning system 122 (the positioning system may be a global positioning system GPS, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an oil temperature gauge) in an internal system of the monitored vehicle 100. One or more pieces of sensor data from the sensors may be used to detect an object and corresponding features (a location, a shape, a direction, a speed, and the like) of the object. The detection and identification are key functions of a safe operation of the autonomous vehicle 100.

The positioning system 122 may be configured to estimate a geographical location of the vehicle 100. The IMU 124 is configured to sense a location and an orientation change of the vehicle 100 based on an inertial acceleration. In an embodiment, the IMU 124 may be a combination of an accelerometer and a gyroscope. The radar 126 may sense an object in the surrounding environment of the vehicle 100 by using a radio signal, and may be specifically represented as a millimeter-wave radar or a lidar. In some embodiments, in addition to sensing the object, the radar 126 may be further configured to sense a speed and/or a moving direction of the object. The laser rangefinder 128 may sense, by using laser light, an object in an environment in which the vehicle 100 is located. In some embodiments, the laser rangefinder 128 may include one or more laser sources, a laser scanner, one or more detectors, and another system component. The camera 130 may be configured to capture a plurality of images of the surrounding environment of the vehicle 100. The camera 130 may be a still camera or a video camera.

The control system 106 controls operations of the vehicle 100 and components of the vehicle 100. The control system 106 may include various components, including a steering system 132, an accelerator 134, a brake unit 136, a computer vision system 140, a route control system 142, and an obstacle avoidance system 144.

The steering system 132 may operate to adjust a moving direction of the vehicle 100. For example, in an embodiment, the steering system 132 may be a steering wheel system. The accelerator 134 is configured to control an operating speed of the engine 118 and further control a speed of the vehicle 100. The brake unit 136 is configured to control the vehicle 100 to decelerate. The brake unit 136 may slow down the wheel 121 through friction. In another embodiment, the brake unit 136 may convert kinetic energy of the wheel 121 into a current. The brake unit 136 may alternatively reduce a rotational speed of the wheel 121 in another form, to control the speed of the vehicle 100. The computer vision system 140 may operate to process and analyze an image captured by the camera 130, to identify an object and/or a feature in the surrounding environment of the vehicle 100. The object and/or the feature may include a traffic signal, a road boundary, and an obstacle. The computer vision system 140 may use an object recognition algorithm, a structure from motion (Structure from Motion, SFM) algorithm, video tracking, and other computer vision technologies. In some embodiments, the computer vision system 140 may be configured to draw a map for an environment, track an object, estimate a speed of an object, or the like. The route control system 142 is configured to determine a travel route and a travel speed of the vehicle 100. In some embodiments, the route control system 142 may include a lateral planning module 1421 and a longitudinal planning module 1422. The lateral planning module 1421 and the longitudinal planning module 1422 are respectively configured to determine the travel route and the travel speed of the vehicle 100 based on data from the obstacle avoidance system 144, the GPS 122, and one or more predetermined maps. The obstacle avoidance system 144 is configured to identify, assess, and avoid or bypass, in another manner, an obstacle in the environment of the vehicle 100. The obstacle may be specifically represented as an actual obstacle or a virtual moving object that may collide with the vehicle 100. In an example, the control system 106 may additionally or alternatively include a component other than the components shown and described. Alternatively, a part of the foregoing components may be omitted.

The vehicle 100 interacts with an external sensor, another vehicle, another computer system, or a user through the peripheral device 108. The peripheral device 108 may include a wireless communication system 146, a vehicle-mounted computer 148, a microphone 150, and/or a speaker 152. In some embodiments, the peripheral device 108 provides a means for a user of the vehicle 100 to interact with the user interface 116. For example, the vehicle-mounted computer 148 may provide information for the user of the vehicle 100. The user interface 116 may further operate the vehicle-mounted computer 148 to receive a user input. The vehicle-mounted computer 148 may be operated through a touchscreen. In another case, the peripheral device 108 may provide a means for the vehicle 100 to communicate with another device located in the vehicle. For example, the microphone 150 may receive audio (for example, a voice command or another audio input) from the user of the vehicle 100. Similarly, the speaker 152 may output audio to the user of the vehicle 100. The wireless communication system 146 may wirelessly communicate with one or more devices directly or through a communication network. For example, the wireless communication system 146 may use 3G cellular communication such as CDMA, EVD0, or GSM/GPRS, 4G cellular communication such as LTE, or 5G cellular communication. The wireless communication system 146 may perform communication through a wireless local area network (wireless local area network, WLAN). In some embodiments, the wireless communication system 146 may directly communicate with a device through an infrared link, Bluetooth, or ZigBee. Other wireless protocols such as various vehicle communication systems may be used. For example, the wireless communication system 146 may include one or more dedicated short range communications (dedicated short range communications, DSRC) devices, and the devices may include public and/or private data communication between vehicles and/or roadside stations.

The power supply 110 may supply power to the components of the vehicle 100. In an embodiment, the power supply 110 may be a rechargeable lithium-ion or lead-acid battery. One or more battery packs of the battery may be configured as a power supply to supply power to the components of the vehicle 100. In some embodiments, the power supply 110 and the energy source 119 may be implemented together, for example, in a manner similar to that in some all-electric vehicles.

A part or all of functions of the vehicle 100 are controlled by the computer system 112. The computer system 112 may include at least one processor 113. The processor 113 executes instructions 115 stored in a nontransient computer-readable medium, for example, a memory 114. The computer system 112 may alternatively be a plurality of compute devices that control individual components or subsystems of the vehicle 100 in a distributed manner. The processor 113 may be any conventional processor, for example, a commercially available central processing unit (central processing unit, CPU). Optionally, the processor 113 may be a dedicated device, for example, an application-specific integrated circuit (application-specific integrated circuit, ASIC) or another hardware-based processor. Although FIG. 16 functionally shows the processor, the memory, and other components of the computer system 112 in a same block, a person of ordinary skill in the art should understand that the processor or the memory may actually include a plurality of processors or memories that are not stored in a same physical housing. For example, the memory 114 may be a hard disk drive or another storage medium located in a housing different from a housing of the computer system 112. Therefore, a reference to the processor 113 or the memory 114 is understood as a reference to a set of processors or memories that may or may not operate concurrently. Different from using a single processor to perform the steps described herein, some components such as a steering component and a deceleration component each may have its own processor, and the processor performs only computation related to a component-specific function.

In the aspects described herein, the processor 113 may be located away from the vehicle 100 and wirelessly communicate with the vehicle 100. In another aspect, some of the processes described herein are performed on a processor 113 disposed in the vehicle 100, and others are performed by a remote processor 113. The processes include necessary steps for performing a single operation.

In some embodiments, the memory 114 may include instructions 115 (for example, program logic), and the instructions 115 may be executed by the processor 113 to perform various functions of the vehicle 100, including the functions described above. The memory 114 may also include additional instructions, including instructions for sending data to, receiving data from, interacting with, and/or controlling one or more of the travel system 102, the sensor system 104, the control system 106, and the peripheral device 108. In addition to the instructions 115, the memory 114 may further store data, for example, a road map, route information, a location, a direction, and a speed of a vehicle, and other similar vehicle data, and other information. The information may be used by the vehicle 100 and the computer system 112 when the vehicle 100 operates in an autonomous mode, a semi-autonomous mode, and/or a manual mode. The user interface 116 is configured to provide information for or receive information from the user of the vehicle 100. Optionally, the user interface 116 may include one or more input/output devices in a set of peripheral devices 108, for example, the wireless communication system 146, the vehicle-mounted computer 148, the microphone 150, and the speaker 152.

The computer system 112 may control a function of the vehicle 100 based on inputs received from various subsystems (for example, the travel system 102, the sensor system 104, and the control system 106) and the user interface 116. For example, the computer system 112 may control, based on an input from the control system 106, the steering system 132 to avoid an obstacle detected by the sensor system 104 and the obstacle avoidance system 144. In some embodiments, the computer system 112 may operate to control the vehicle 100 and the subsystems of the vehicle 100 in many aspects.

Optionally, one or more of the foregoing components may be mounted separately from or associated with the vehicle 100. For example, the memory 114 may be partially or completely separated from the vehicle 100. The foregoing components may be communicatively coupled together in a wired manner and/or wireless manner.

Optionally, the foregoing components are merely examples. During actual application, components in the foregoing modules may be added or omitted according to an actual requirement. FIG. 16 should not be understood as a limitation on embodiments of this application. A vehicle traveling on a road, for example, the foregoing vehicle 100, may identify an object in a surrounding environment of the vehicle, to determine to adjust a current speed. The object may be another vehicle, a traffic control device, or another type of object. In some examples, each identified object may be independently considered, and a speed to which the vehicle is to be adjusted may be determined based on respective characteristics of the object, for example, a current speed and an acceleration of the object, and a distance between the object and the vehicle.

Optionally, the vehicle 100 or a compute device associated with the vehicle 100, for example, the computer system 112, the computer vision system 140, or the memory 114 in FIG. 16, may predict behavior of the identified object based on characteristics of the identified object and a status (for example, traffic, rain, or ice on a road) of the surrounding environment. Optionally, all identified objects depend on behavior of each other. Therefore, all of the identified objects may alternatively be jointly considered to predict behavior of a single identified object. The vehicle 100 can adjust the speed of the vehicle 100 based on the predicted behavior of the identified object. In other words, the vehicle 100 can determine, based on the predicted behavior of the object, a stable state to which the vehicle needs to be adjusted (for example, accelerated, decelerated, or stopped). In this process, other factors, for example, a lateral location of the vehicle 100 on the road on which the vehicle 100 travels, a curvature of the road, and proximity of static and dynamic objects, may also be considered to determine the speed of the vehicle 100. In addition to providing instructions for adjusting the speed of the vehicle, the compute device may further provide instructions for modifying a steering angle of the vehicle 100, so that the vehicle 100 follows a given trajectory and/or retains safe lateral and longitudinal distances from an object (for example, a car in an adjacent lane on the road) near the vehicle 100.

The vehicle 100 may be a car, a truck, a motorcycle, a bus, a ship, an airplane, a helicopter, a lawn mower, an entertainment vehicle, a playground vehicle, a construction device, a tram, a golf cart, a train, or the like. This is not particularly limited in this embodiment of this application.

In this embodiment of this application, the processor 113 in the vehicle 100 is configured to perform the methods performed by the first device and/or the execution device in the embodiments corresponding to FIG. 3 to FIG. 11. It should be noted that a specific manner of performing the foregoing steps by the processor 113 is based on a same concept as that of the method embodiments corresponding to FIG. 3 to FIG. 11 in this application, and technical effects of this embodiment of this application are the same as those of the method embodiments corresponding to FIG. 3 to FIG. 11 in this application. For specific content, refer to the descriptions in the method embodiments in this application. Details are not described herein again.

An embodiment of this application further provides a computer-readable storage medium. The computer-readable storage medium stores a program. When the program runs on a computer, the computer is enabled to perform the steps performed by the first device and/or the execution device in the methods described in the embodiments shown in FIG. 3 to FIG. 11, or the computer is enabled to perform the steps performed by the training device in the methods described in the embodiments shown in FIG. 3 to FIG. 11.

An embodiment of this application further provides a computer program product. The computer program product includes a program. When the program runs on a computer, the computer is enabled to perform the steps performed by the first device and/or the execution device in the methods described in the embodiments shown in FIG. 3 to FIG. 11, or the computer is enabled to perform the steps performed by the training device in the methods described in the embodiments shown in FIG. 3 to FIG. 11.

An embodiment of this application further provides a circuit system. The circuit system includes a processing circuit. The processing circuit is configured to perform the steps performed by the first device and/or the execution device in the methods described in the embodiments shown in FIG. 3 to FIG. 11, or the processing circuit is configured to perform the steps performed by the training device in the methods described in the embodiments shown in FIG. 3 to FIG. 11.

The information processing apparatus, the device, or the vehicle provided in embodiments of this application may be a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable the chip in a server to perform the methods described in the embodiments shown in FIG. 3 to FIG. 11. Optionally, the storage unit is a storage unit in the chip, for example, a register or a cache. Alternatively, the storage unit may be a storage unit that is in a wireless access device and that is outside the chip, for example, a read-only memory (read-only memory, ROM), another type of static storage device that can store static information and instructions, or a random access memory (random access memory, RAM).

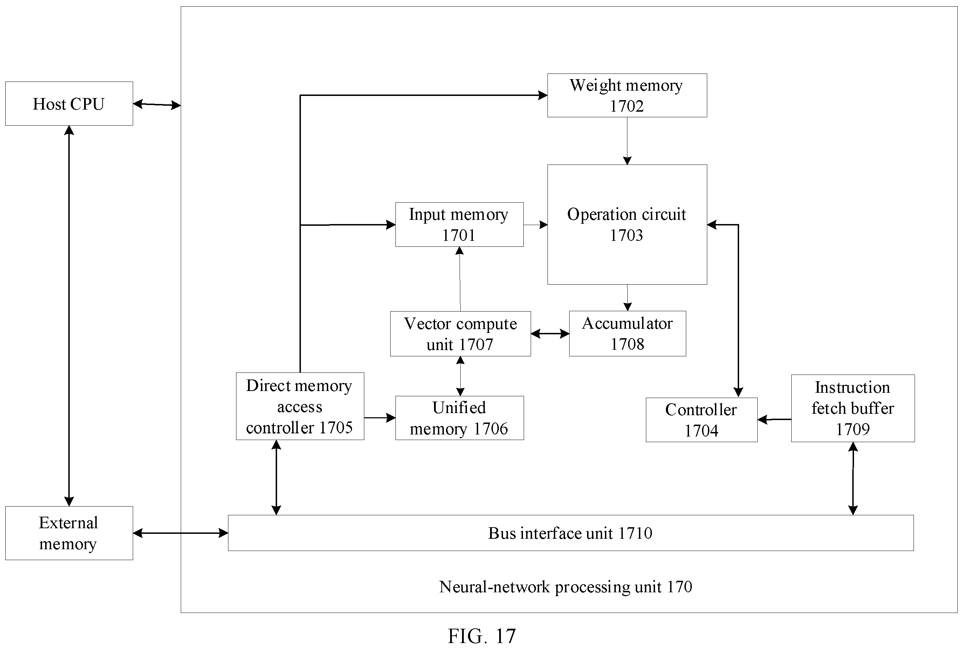

Specifically, FIG. 17 is a diagram of a structure of a chip according to an embodiment of this application. The chip may be represented as a neural-network processing unit NPU 170. The NPU 170 is mounted to a host CPU (Host CPU) as a coprocessor, and the host CPU allocates a task to the NPU 170. A core part of the NPU is an operation circuit 1703. A controller 1704 controls the operation circuit 1703 to extract matrix data in a memory and perform a multiplication operation.

In some implementations, the operation circuit 1703 includes a plurality of process engines (Process Engine, PE). In some implementations, the operation circuit 1703 is a two-dimensional systolic array. The operation circuit 1703 may alternatively be a one-dimensional systolic array or another electronic circuit capable of performing mathematical operations such as multiplication and addition. In some implementations, the operation circuit 1703 is a general-purpose matrix processor.

For example, it is assumed that there is an input matrix A, a weight matrix B, and an output matrix C. The operation circuit fetches, from a weight memory 1702, data corresponding to the matrix B, and caches the data in each PE in the operation circuit. The operation circuit fetches data of the matrix A from an input memory 1701 to perform a matrix operation on the matrix B, and stores an obtained partial result or an obtained final result of the matrix in an accumulator (accumulator) 1708.

A unified memory 1706 is configured to store input data and output data. Weight data is directly transferred to the weight memory 1702 through a direct memory access controller (Direct Memory Access Controller, DMAC) 1705. Input data is also transferred to the unified memory 1706 through the DMAC.

A BIU is a bus interface unit, namely, a bus interface unit 1710, and is used for interaction between an AXI bus and the DMAC and between the AXI bus and an instruction fetch buffer (Instruction Fetch Buffer, IFB) 1709.

The bus interface unit (Bus Interface Unit, BIU for short) 1710 is used for the instruction fetch buffer 1709 to obtain instructions from an external memory, and is further used for the direct memory access controller 1705 to obtain raw data of the input matrix A or the weight matrix B from the external memory.

The DMAC is mainly configured to transfer input data in the external memory DDR to the unified memory 1706, transfer weight data to the weight memory 1702, or transfer input data to the input memory 1701.

A vector compute unit 1707 includes a plurality of operation processing units, and if needed, performs further processing, for example, vector multiplication, vector addition, an exponential operation, a logarithmic operation, or magnitude comparison, on output of the operation circuit. The vector compute unit is mainly used for network computing, for example, batch normalization (batch normalization), pixel-level summation, or upsampling on a feature plane, at a non-convolutional/fully connected layer of a neural network.

In some implementations, the vector compute unit 1707 can store a processed output vector in the unified memory 1706. For example, the vector compute unit 1707 may apply a linear function and/or a non-linear function to the output of the operation circuit 1703, for example, perform linear interpolation on a feature plane extracted at a convolutional layer, or for another example, use a vector of an accumulated value to generate an activation value. In some implementations, the vector compute unit 1707 generates a normalized value, a pixel-level summation value, or both a normalized value and a pixel-level summation value. In some implementations, the processed output vector can be used as an activation input for the operation circuit 1703, for example, used at a subsequent layer in the neural network.

The instruction fetch buffer (instruction fetch buffer) 1709 connected to the controller 1704 is configured to store instructions to be used by the controller 1704.

All of the unified memory 1706, the input memory 1701, the weight memory 1702, and the instruction fetch buffer 1709 are on-chip memories. The external memory is private for a hardware architecture of the NPU.

An operation at each layer in the deep learning model, the first feature extraction network, and the second feature extraction network shown in FIG. 3 to FIG. 11 may be performed by the operation circuit 1703 or the vector compute unit 1707.

Any aforementioned processor may be a general-purpose central processing unit, a microprocessor, an ASIC, or one or more integrated circuits for controlling execution of a program for the method according to the first aspect.

In addition, it should be noted that the described apparatus embodiments are merely examples. The units described as separate parts may or may not be physically separated, and parts shown as units may or may not be physical units, to be specific, may be located in one place, or may be distributed on a plurality of network units. Some or all of the modules may be selected according to actual requirements to achieve the objectives of the solutions of embodiments. In addition, in the accompanying drawings of the apparatus embodiments provided in this application, a connection relationship between modules indicates that the modules have a communication connection, which may be specifically implemented as one or more communication buses or signal lines.

According to the descriptions of the foregoing implementations, a person skilled in the art can clearly understand that this application may be implemented by software in combination with necessary general-purpose hardware, or certainly may be implemented by dedicated hardware, including an application-specific integrated circuit, a dedicated CPU, a dedicated memory, a dedicated component, or the like. Usually, any function performed by a computer program may be easily implemented by corresponding hardware. In addition, a specific hardware structure used to implement a same function may be in various forms, for example, in a form of an analog circuit, a digital circuit, or a dedicated circuit. However, in this application, an implementation by using a software program is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk drive, a ROM, a RAM, a magnetic disk, or a compact disc of a computer, and includes several instructions for instructing a computer device (which may be a personal computer, a training device, a network device, or the like) to perform the methods described in embodiments of this application.

All or some of the foregoing embodiments may be implemented by software, hardware, firmware, or any combination thereof. When the embodiments are implemented by software, all or some of the embodiments may be implemented in a form of a computer program product.

The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored on a computer, or a data storage device, for example, a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. An information processing method, wherein the method comprises:
inputting, to a deep learning model, first information corresponding to a traffic scene around an ego vehicle, wherein the first information comprises first text information; and
obtaining second information corresponding to the first information, wherein the second information is obtained based on the deep learning model, and the second information corresponds to any one of the following tasks: making a decision on behavior of the ego vehicle, planning a trajectory for the ego vehicle, or controlling the ego vehicle.

2. The method according to claim 1, wherein the first text information comprises information about preset text corresponding to the task, or the first text information comprises information about text entered by a user.

3. The method according to claim 1 or 2, wherein the method further comprises:
inputting, to the deep learning model, a first question corresponding to the traffic scene, wherein the first question is used to obtain a first answer corresponding to the first question, the first answer is obtained by the deep learning model, the first information is a second question, the second information is a second answer corresponding to the second question, and the first text information comprises information in the first answer.

4. The method according to claim 1 or 2, wherein the first information further comprises first feature information, the first feature information comprises feature information of information about an environment around the ego vehicle, and the information about the environment comprises physical attribute information of an object around the ego vehicle.

5. The method according to claim 4, wherein the first feature information is obtained based on a feature extraction network, the feature extraction network belongs to a first neural network, and the first neural network is configured to perform at least two of the following tasks: predicting a trajectory of an object around the ego vehicle, making a decision on behavior of the ego vehicle, planning a trajectory for the ego vehicle, predicting a speed range of the ego vehicle, or controlling the ego vehicle.

6. The method according to claim 1 or 2, wherein the first information is a second question, the second information is a second answer corresponding to the second question, the second answer is comprised in a preset answer set corresponding to the second question, and the second answer is obtained, based on the preset answer set, from at least one candidate answer generated by the deep learning model.

7. The method according to claim 1 or 2, wherein the first information is a second question, the second information is a second answer corresponding to the second question, the second answer is obtained by a classification network, second feature information comprises feature information of a start flag [CLS] bit in feature information of the second answer, and the classification network is configured to determine, from at least one preset answer, the second answer corresponding to the second feature information.

8. The method according to claim 1 or 2, wherein the first information is a second question, the second information is a second answer corresponding to the second question, and inputting, to the deep learning model, the first information corresponding to the traffic scene around the ego vehicle comprises:
inputting a plurality of second questions to the deep learning model, wherein different second questions of the plurality of second questions carry different prompts; and
obtaining the second information corresponding to the first information comprises:
obtaining a plurality of reference answers that are in a one-to-one correspondence with the plurality of second questions, wherein all of the plurality of reference answers are obtained by the deep learning model; and
determining the second answer based on the plurality of reference answers.

9. An information processing method, wherein the method comprises:
inputting a first question to a deep learning model, and obtaining a first answer corresponding to the first question;
determining a second question based on the first answer, wherein the second question carries information in the first answer; and
inputting the second question to the deep learning model, and obtaining a second answer corresponding to the second question, wherein the first question and the second question correspond to a same traffic scene.

10. The method according to claim 9, wherein the second answer corresponds to any one of the following tasks: identifying a risky obstacle around an ego vehicle, identifying behavior of an object around an ego vehicle, predicting behavior of an object around an ego vehicle, predicting a trajectory of an object around an ego vehicle, making a decision on behavior of an ego vehicle, planning a trajectory for an ego vehicle, or controlling an ego vehicle.

11. An information processing method, wherein the method is used to train a deep learning model, the deep learning model comprises at least two training phases, the at least two training phases comprise a first training phase and a second training phase, and the method comprises:
in the first training phase, inputting a third question to the deep learning model, and obtaining a predicted answer corresponding to the third question; and
in the second training phase, inputting a fourth question to the deep learning model, and obtaining a predicted answer corresponding to the fourth question, wherein
a first loss function is used to train the deep learning model; in the first training phase, the first loss function indicates a similarity between the predicted answer and an expected answer that correspond to the third question; in the second training phase, the first loss function indicates a similarity between the predicted answer and an expected answer that correspond to the fourth question; both the third question and the fourth question are related to a traffic scene; and the third question and the fourth question are used to obtain information at different levels.

12. The method according to claim 11, wherein the third question comprises first feature information, the first feature information comprises feature information of information about an environment around an ego vehicle, and the information about the environment comprises physical attribute information of an object around the ego vehicle.

13. The method according to claim 12, wherein before inputting the third question to the deep learning model, the method further comprises:
inputting the information about the environment to a feature extraction network, to obtain second feature information generated by the feature extraction network, wherein the second feature information is used to obtain the first feature information; and
inputting the first feature information to a feature processing network, to obtain predicted information generated by the feature processing network, wherein the feature extraction network and the feature processing network belong to a same neural network, and the neural network is configured to perform at least the following plurality of tasks: predicting a trajectory of an object around the ego vehicle, making a decision on behavior of the ego vehicle, planning a trajectory for the ego vehicle, predicting a speed range of the ego vehicle, or controlling the ego vehicle, wherein
a training phase of the deep learning model comprises training the deep learning model and the neural network by using the first loss function and a second loss function, and the second loss function indicates a similarity between the predicted information and second expected information that correspond to the information about the environment.

14. An information processing apparatus, wherein the apparatus comprises:
an input module, configured to input, to a deep learning model, first information corresponding to a traffic scene around an ego vehicle, wherein the first information comprises first text information; and
an obtaining module, configured to obtain second information corresponding to the first information, wherein the second information is obtained based on the deep learning model, and the second information corresponds to any one of the following tasks: making a decision on behavior of the ego vehicle, planning a trajectory for the ego vehicle, or controlling the ego vehicle.

15. The apparatus according to claim 14, wherein the first text information comprises information about preset text corresponding to the task, or the first text information comprises information about text entered by a user.

16. The apparatus according to claim 14 or 15, wherein
the input module is further configured to input, to the deep learning model, a first question corresponding to the traffic scene, wherein the first question is used to obtain a first answer corresponding to the first question, the first answer is obtained by the deep learning model, the first information is a second question, the second information is a second answer corresponding to the second question, and the first text information comprises information in the first answer.

17. The apparatus according to claim 14 or 15, wherein the first information further comprises first feature information, the first feature information comprises feature information of information about an environment around the ego vehicle, and the information about the environment comprises physical attribute information of an object around the ego vehicle.

18. The apparatus according to claim 17, wherein the first feature information is obtained based on a feature extraction network, the feature extraction network belongs to a first neural network, and the first neural network is configured to perform at least two of the following tasks: predicting a trajectory of an object around the ego vehicle, making a decision on behavior of the ego vehicle, planning a trajectory for the ego vehicle, predicting a speed range of the ego vehicle, or controlling the ego vehicle.

19. The apparatus according to claim 14 or 15, wherein the first information is a second question, the second information is a second answer corresponding to the second question, the second answer is comprised in a preset answer set corresponding to the second question, and the second answer is obtained, based on the preset answer set, from at least one candidate answer generated by the deep learning model.

20. The apparatus according to claim 14 or 15, wherein the first information is a second question, the second information is a second answer corresponding to the second question, the second answer is obtained by a classification network, second feature information comprises feature information of a start flag [CLS] bit in feature information of the second answer, and the classification network is configured to determine, from at least one preset answer, the second answer corresponding to the second feature information.

21. The apparatus according to claim 14 or 15, wherein the first information is a second question, and the second information is a second answer corresponding to the second question;
the input module is specifically configured to input a plurality of second questions to the deep learning model, wherein different second questions of the plurality of second questions carry different prompts; and
the obtaining module is specifically configured to obtain a plurality of reference answers that are in a one-to-one correspondence with the plurality of second questions, and determine the second answer based on the plurality of reference answers, wherein all of the plurality of reference answers are obtained by the deep learning model.

22. An information processing apparatus, wherein the apparatus comprises:
an input module, configured to input a first question to a deep learning model, and obtain a first answer corresponding to the first question; and
a determining module, configured to determine a second question based on the first answer, wherein the second question carries information in the first answer, wherein
the input module is further configured to input the second question to the deep learning model, and obtain a second answer corresponding to the second question, wherein the first question and the second question correspond to a same traffic scene.

23. The apparatus according to claim 22, wherein the second answer corresponds to any one of the following tasks: identifying a risky obstacle around an ego vehicle, identifying behavior of an object around an ego vehicle, predicting behavior of an object around an ego vehicle, predicting a trajectory of an object around an ego vehicle, making a decision on behavior of an ego vehicle, planning a trajectory for an ego vehicle, or controlling an ego vehicle.

24. An information processing apparatus, wherein the apparatus is configured to train a deep learning model, the deep learning model comprises at least two training phases, the at least two training phases comprise a first training phase and a second training phase, and the apparatus comprises:
an input module, configured to: in the first training phase, input a third question to the deep learning model, and obtain a predicted answer corresponding to the third question, wherein
the input module is further configured to: in the second training phase, input a fourth question to the deep learning model, and obtain a predicted answer corresponding to the fourth question, wherein
a first loss function is used to train the deep learning model; in the first training phase, the first loss function indicates a similarity between the predicted answer and an expected answer that correspond to the third question; in the second training phase, the first loss function indicates a similarity between the predicted answer and an expected answer that correspond to the fourth question; both the third question and the fourth question are related to a traffic scene; and the third question and the fourth question are used to obtain information at different levels.

25. The apparatus according to claim 24, wherein the third question comprises first feature information, the first feature information comprises feature information of information about an environment around an ego vehicle, and the information about the environment comprises physical attribute information of an object around the ego vehicle.

26. The apparatus according to claim 25, wherein the apparatus further comprises:
a feature extraction module, configured to input the information about the environment to a feature extraction network, to obtain second feature information generated by the feature extraction network, wherein the second feature information is used to obtain the first feature information; and
a feature processing module, configured to input the first feature information to a feature processing network, to obtain predicted information generated by the feature processing network, wherein the feature extraction network and the feature processing network belong to a same neural network, and the neural network is configured to perform at least the following plurality of tasks: predicting a trajectory of an object around the ego vehicle, making a decision on behavior of the ego vehicle, planning a trajectory for the ego vehicle, predicting a speed range of the ego vehicle, or controlling the ego vehicle, wherein
a training phase of the deep learning model comprises training the deep learning model and the neural network by using the first loss function and a second loss function, and the second loss function indicates a similarity between the predicted information and second expected information that correspond to the information about the environment.

27. A device, comprising a processor, wherein the processor is coupled to a memory, the memory stores program instructions, and when the program instructions stored in the memory are executed by the processor, the method according to any one of claims 1 to 13 is implemented.

28. A vehicle, comprising a processor, wherein the processor is coupled to a memory, the memory stores program instructions, and when the program instructions stored in the memory are executed by the processor, the method according to any one of claims 1 to 10 is implemented.

29. A computer-readable storage medium, comprising a program, wherein when the program runs on a computer, the computer is enabled to perform the method according to any one of claims 1 to 13.

30. A circuit system, wherein the circuit system comprises a processing circuit, and the processing circuit is configured to perform the method according to any one of claims 1 to 13.
